(19) **Europäisches Patentamt**
**European Patent Office**
**Office européen des brevets**

(11) **EP 2 223 791 B1**

(12) **EUROPEAN PATENT SPECIFICATION**

(45) Date of publication and mention
of the grant of the patent:
**23.08.2017  Bulletin 2017/34**

(51) Int Cl.:
***B29C 55/16*** *(2006.01)*    ***B29K 77/00*** *(2006.01)*
***B29L 7/00*** *(2006.01)*

(21) Application number: **08848250.0**

(86) International application number:
**PCT/JP2008/003224**

(22) Date of filing: **07.11.2008**

(87) International publication number:
**WO 2009/060618 (14.05.2009 Gazette 2009/20)**

(54) **PROCESS FOR PRODUCING POLYAMIDE RESIN FILM AND POLYAMIDE RESIN FILM OBTAINED BY THE PROCESS**

HERSTELLUNGSVERFAHREN FÜR EINEN POLYAMIDHARZFILM UND MIT DIESEM VERFAHREN HERGESTELLTER POLYAMIDHARZFILM

PROCÉDÉ DE PRODUCTION D'UN FILM DE RÉSINE DE POLYAMIDE ET FILM DE RÉSINE DE POLYAMIDE OBTENU AVEC LE PROCÉDÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.11.2007  JP 2007290239**
**25.09.2008  JP 2008245054**
**31.10.2008  JP 2008280620**
**05.11.2008  JP 2008284323**

(43) Date of publication of application:
**01.09.2010  Bulletin 2010/35**

(73) Proprietor: **UNITIKA LTD.**
**Amagasaki-shi**
**Hyogo 660-0824 (JP)**

(72) Inventors:
• **TSUBOUCHI, Kenji**
**Kyoto 611-0021 (JP)**
• **NODA, Atsuko**
**Kyoto 611-0021 (JP)**
• **KUWATA, Hideki**
**Kyoto 611-0021 (JP)**

(74) Representative: **Vigand, Philippe et al**
**Novagraaf International SA**
**Chemin de l'Echo 3**
**1213 Onex - Genève (CH)**

(56) References cited:
**WO-A1-2005/118262    WO-A1-2006/112090**
**JP-A- 1 022 531    JP-A- 2 131 920**
**JP-A- 2002 370 278**

EP 2 223 791 B1

**Description**

Technical Field

The present invention relates to a process for producing a polyamide resin film.

Background Art

Biaxially oriented polyamide resin films mainly composed of nylon are tough and excellent in properties such as gas-barrier property, anti-pinhole property, transparency and printability, and hence are widely put into practical use as the packaging materials for various types of food such as liquid food, water-containing food, frozen food, retort food, pasty food and animal meat/aquatic food. In particular, nowadays, biaxially oriented polyamide resin films are widely used for packaging retort food.

Usually, a biaxially oriented polyamide resin film is not used as a simple material, but is laminated with a polyethylene resin film or a polypropylene resin film (sealant) to be processed into a bag shape so as to be a packaging material. Alternatively, frequently, a biaxially oriented polyamide resin film is, where necessary, subjected to treatments such as an easy-adhesion coating, an antistatic coating and a barrier-property development coating, subjected to treatments such as metal vapor-deposition processing or subjected to treatments such as a corona treatment, and then the biaxially oriented polyamide resin film is laminated with a sealant to be processed into a bag shape so as to be a packaging material.

However, when the physical properties of the polyamide resin film are nonuniform in the transverse direction (also referred to as "widthwise direction") and/or in the longitudinal direction (also referred to as "lengthwise directional) of the film, the thickness of the coat layer or the metal vapor-deposited layer tends to be uneven or the adhesion strength with the coat layer or the metal vapor-deposited layer tends to be uneven. Consequently, the easy-adhesion performance, the antistatic performance and/or the gas-barrier performance of the film tends to be nonuniform, and disadvantageously the S-shaped curling phenomenon that the film is deformed in a curved shape in the process of laminating with the sealant may also be caused.

Usually, as the process for producing a biaxially stretched polyamide resin film, adopted is a method in which a high-strength biaxially oriented film having a sufficient molecular orientation is obtained under the conditions that a substantially non-oriented unstretched film is continuously molded in an extrusion step and then the unstretched film is biaxially stretched both in the longitudinal direction and in the transverse direction of the unstretched film. Examples of the biaxial stretching method include a successive biaxial stretching method in which longitudinal stretching is followed by transverse stretching, and a simultaneous biaxial stretching method in which longitudinal stretching and transverse stretching are performed simultaneously.

As for the successive stretching, JP3671978B (see also WO2005/118262A1 belonging to the same family) has proposed a method in which by regulating the boiling water shrinkage rate, the directional difference of the boiling water shrinkage rate, the thickness unevenness, the refractive index in the thickness direction and the like of a rolled polyamide resin film to fall within specific numerical ranges and by specifying the variation rates of these properties in the lengthwise direction, a biaxially oriented polyamide resin film free from the occurrence of the S-shaped curling phenomenon is obtained.

However, JP3671978B has focused attention only to the variations in the lengthwise direction of the polyamide resin film. In general, a polyamide resin film is different in the mechanical properties in the transverse direction and the longitudinal direction of the film at the time of the production thereof. Accordingly, the technique described in JP3671978B causes anisotropy in the product performances when the film is processed into products such as packaging materials and hence disadvantageously such products are not easy to use.

WO2006/112090A1 discloses a biaxially oriented polyamide-based blend resin film also obtained by successive biaxial stretching.

As compared to the successive biaxial stretching method, the simultaneous biaxial stretching method has an excellent advantage that a film uniform in the orientational balance in the in-plane directions of the film is obtained, and hence is an effective method to solve the technical problems involved in JP3671978B. However, the simultaneous biaxial stretching method has a difficulty in performing uniform deformation in the stretching step because the simultaneous biaxial stretching method is performed by using a physically complicated stretching mechanism, namely, a longitudinal stretching mechanism in which the traveling speed of the clips that grip the edges of an unstretched film is subjected to a mechanical or electro-instrumental acceleration and control.

Investigations have been performed till now to make uniform the deformation behavior in the stretching step by elaborating the trace of the longitudinal stretching magnification factor in the simultaneous biaxial stretching method. The trace of the stretching magnification factor as referred to herein means the variation of the stretching magnification factor from the stretching starting point to the point where the maximum stretching magnification factor is reached.

As a technique to suppress the bowing phenomenon, for example, there have been proposed a method in which a transverse stretching is performed while a relaxation treatment is being performed in the longitudinal direction (JP2000-309051A), or a method in which the longitudinal stretching magnification factor trace is made to precede the transverse stretching magnification factor trace (JP2002-370278A). The statement that the longitudinal stretching magnification factor trace is made to precede the transverse stretching magnification factor trace means the fact that the variation value of the longitudinal stretching magnification factor is made larger than the variation value of the transverse stretching magnification factor at any given point from the stretching starting point to the point where the maximum stretching magnification factor is reached, under the conditions that the magnification factor variations are normalized. In other words, the statement that the longitudinal stretching magnification factor trace is made to precede the transverse stretching magnification factor trace means the fact that at any given point in time during the stretching, the magnification factor of the longitudinal stretching at the given point in time relative to the maximum stretching magnification factor of the longitudinal stretching is made higher than the magnification factor of the transverse stretching at the given point in time relative to the maximum stretching magnification factor of the transverse stretching.

However, in particular when the longitudinal stretching magnification factor trace cannot be skillfully controlled, disadvantageously the stretching unevenness due to the stress relaxation occurs in the film to augment the thickness unevenness. The stretching unevenness made to occur in the stretching step first occurs as the thickness unevenness, and additionally leads to the unevenness in the film physical properties due to the difference in the molecular orientation. Even if not involved directly in the adverse effects in the film production process, the unevenness in the physical properties leads to the occurrence of the troubles such as printing pitch mismatch, meandering, seal failure and unevenness in bag-making in the processing steps such as the printing, laminating and bag-making and packaging of the film product as an example of the application to packaging. Therefore, the unevenness in the physical properties causes the quality degradation of the processed film products. In particular in the application requiring a satisfactory balance in the physical properties, such a film cannot be handled as a stretched film having the equal physical properties across the whole width of the film.

Disclosure of the Invention

Problems to be Solved by the Invention

An object of the present invention is to provide a polyamide resin film which is uniform and has an excellent quality stability, by suppressing as much as possible the stretching unevenness and the thickness unevenness augmentation, due to the stress relaxation, offering problems in the simultaneous biaxial stretching method.

Means for Solving the Problems

Specifically, the features of the present invention are as follows.

(1) A process for producing a polyamide resin film, wherein in a simultaneous biaxial tenter stretching method for simultaneously biaxially, longitudinally and transversely, stretching an unstretched film by gripping the widthwise edges of the unstretched film with clips, from the start of the transverse stretching until the maximum stretching magnification factor of the transverse stretching is reached, the longitudinal stretching magnification factor represented by the linear distance between the adjacent clips is prevented from being decreased by 5% or more of the maximum stretching magnification factor of the longitudinal stretching.

(2) The process for producing a polyamide resin film according to (1), wherein from the start of the transverse stretching until the maximum stretching magnification factor of the transverse stretching is reached, the longitudinal stretching magnification factor represented by the linear distance between the adjacent clips is prevented from being decreased by more than 3% of the maximum stretching magnification factor of the longitudinal stretching.

(3) The process for producing a polyamide resin film according to (1) or (2), wherein at any given point in time during stretching, the magnification factor of the longitudinal stretching at the given point in time relative to the maximum stretching magnification factor of the longitudinal stretching is made higher than the magnification factor of the transverse stretching at the given point in time relative to the maximum stretching magnification factor of the transverse stretching.

(4) The process for producing a polyamide resin film according to any one of (1) to (3), wherein the longitudinal stretching magnification factor of the simultaneous biaxial stretching is 2.5 or more and 4.5 or less and the ratio between the longitudinal stretching magnification factor and the transverse stretching magnification factor is 1:0.5 to 1.5.

(5) The process for producing a polyamide resin film according to any one of (1) to (4), wherein a simultaneous biaxial tenter stretching machine is driven by a linear motor system.

(6) The process for producing a polyamide resin film according to any one of (1) to (5), wherein a laminated portion is formed by a coating method on at least one side of an unstretched film obtained by pressing against a cast roll a polyamide resin sheet melt-extruded from a die, and the laminate thus obtained is stretched simultaneously biaxially, longitudinally and transversely, by gripping with the clips the both widthwise edges of the laminate thus obtained.

Advantage of the Invention

According to the present invention, a polyamide resin film which is uniform and has an excellent quality stability can be obtained.

Brief Description of the Drawings

FIG. 1 is a graph showing an example of a longitudinal stretching magnification factor trace based on the present invention;
FIG. 2 is a view illustrating an actual mechanism in the early stretching stage;
FIG. 3 is a view illustrating an actual mechanism in the final stretching stage; and
FIG. 4 is a view illustrating the stretching stress exerted on a clip.

Best Mode for Carrying Out the Invention

The present invention adopts a simultaneous biaxial tenter stretching method in which by gripping with a large number of clips each of the both widthwise edges of an unstretched film, the unstretched film is simultaneously biaxially stretched both in the longitudinal direction and in the transverse direction of the film. In this simultaneous biaxial stretching method, it is most important that until the transverse stretching magnification factor trace reaches the maximum magnification factor, the longitudinal stretching magnification factor trace represented by the inter-clip distance be prevented from being decreased by 5% or more, preferably by 3% or more and furthermore preferably by 2% or more of the maximum stretching magnification factor.

The biaxially stretched film is produced in a condition of being continuous in the longitudinal direction of the film, and the longitudinal stretching magnification factor trace as referred to in the present invention means the variation of the stretching magnification factor from the position of the stretching starting point along the longitudinal direction of the film in the stretching apparatus to the position of the point where the maximum stretching magnification factor is reached along the longitudinal direction of the film in the stretching apparatus. Additionally, the stretching magnification factor trace in the transverse direction of the film is referred to as the transverse stretching magnification factor trace.

In known techniques, for example, as is seen in JP2-131920A (in particular, p. 2, the lower left section, lines 15 to 17), the stretching magnification factor trace is determined by the shape of the guide rail to guide the tenter. In contrast to this, in the present invention, the stretching magnification factor trace is determined on the basis of the movement orbit of the clips. Possible examples of the longitudinal stretching magnification factor trace may include: (i) the longitudinal stretching magnification factor trace represented by the linear distance between the adjacent clips; and (ii) the longitudinal stretching magnification factor trace represented by the distance obtained by projecting the inter-clip distance to the longitudinal (film flow) direction. In the present invention, (i) is used and is referred to as the "longitudinal stretching magnification factor trace represented by the inter-clip distance."

The reason for the determination of the stretching magnification factor trace on the basis of the movement of the clips is as follows. In the simultaneous biaxial tenter stretching machine, the clips are attached to the supports traveling by being guided by the guide rail, and disposed on the film side away from the position of the supports, namely, the position of the guide rail for the purpose of preventing the film from being stained by the oil droplets flying from the supports or the rail. Consequently, the movement orbit of the clips is different from the traveling orbit of the supports, namely, the shape of the guide rail. In other words, the movement orbit of the clips is distorted relative to the shape of the guide rail.

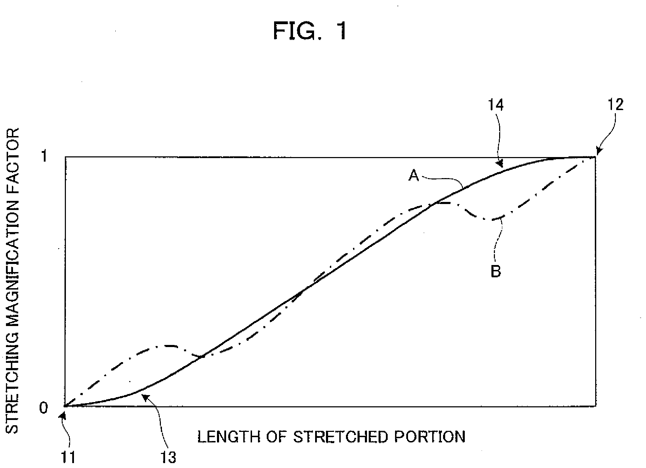

FIG. 1 shows an example of the longitudinal stretching magnification factor trace. In the stretching treatment of the film, the respective steps of preheating, stretching and heat treating are performed. The longitudinal stretching magnification factor trace of FIG. 1 shows the stretching magnification factor trace observed when the film is subjected to stretching treatment in the step of stretching after the film has been subjected to the step of preheating in the region beyond the left end of FIG. 1. The film having been subjected to the stretching treatment is subjected to the step of heat treating in the region beyond the right end of FIG. 1. When the stretching magnification factor trace is determined by the shape of the guide rail as in the above-described known technique, this stretching magnification factor trace corresponds to the shape of the guide rail. In FIG. 1, reference numeral 11 denotes the stretching starting point and reference numeral 12 denotes the point where the maximum stretching magnification factor is reached. Reference numeral 13 denotes the early stretching stage which performs the transition from the parallel linear traveling region in the preheating zone of the simultaneous biaxial stretching machine to the gradually expanding-stretching traveling region. Reference numeral 14 denotes the final stretching stage which performs the transition from the gradually-expanding stretching traveling region to the parallel linear traveling region in the heat treatment zone.

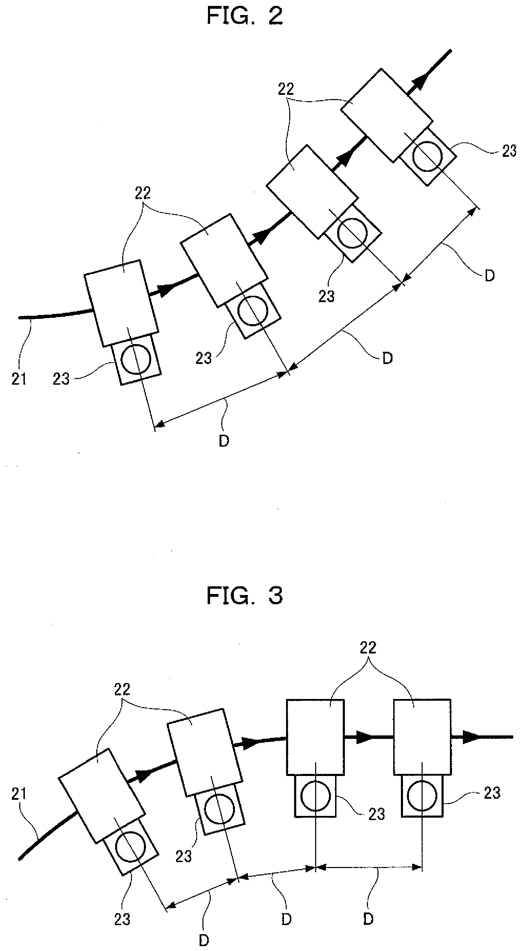

FIG. 2 illustrates an actual mechanism in the early stretching stage 13. Reference numeral 21 denotes the guide rail, reference numeral 22 denotes each of the supports and reference numeral 23 denotes each of the clips. In the early stretching stage 13, the guide rail 21 is curved, and the supports 22 are guided by the guide rail 21 to travel along the orbit identical in shape to the guide rail 21. In contrast to this, the clips 23 are attached to the supports 22, at the positions away from the guide rail 21 toward the film, and consequently, the movement orbit of the clips 23 is distorted relative to the shape of the guide rail 21. Here, as shown in the figure, the linear inter-clip distance D is larger as compared to the corresponding distance in the shape of the guide rail 21. In other words, the linear inter-clip distance D undergoes an expansion, and the distortion due to the expansion occurs.

FIG. 3 illustrates an actual mechanism in the final stretching stage 14. Also in this case, the guide rail 21 is curved, and the movement orbit of the clips 23 is distorted relative to the shape of the guide rail 21. Here, as shown in the figure, the linear inter-clip distance D is smaller as compared to the corresponding distance in the shape of the guide rail 21. In other words, the linear inter-clip distance D undergoes a shrinkage, and the distortion due to the shrinkage occurs.

FIGS. 2 and 3 show one widthwise edge of the film. Actually, the other widthwise edge of the film undergoes the same treatment on the basis of the mechanism symmetric to the above-described mechanism. In other words, the both widthwise edges of the film are drawn both in the longitudinal direction and in the transverse direction, and thus the film is simultaneously biaxially stretched.

As is clear from the above description, when the stretching magnification factor trace is specified by the shape of the guide rail 21, a distortion occurs in the actual stretching magnification factor trace. As described above, this distortion mainly occurs in the following two places: one is the curved orbit shown in FIG. 2 in the early stretching stage 13 which performs the transition from the parallel linear traveling in the preheating zone to the gradually-expanding stretching traveling, and the other is the reversely curved orbit shown in FIG. 3 in the final stretching stage 14 which performs subsequently the transition from the gradually expanding-stretching traveling to the parallel linear traveling in the heat treatment zone. In other words, the inter-clip distance D varies in the curved orbit of the early stretching stage 13 so as to expand once in the first place and to then get back as before, and the inter-clip distance D varies in the curved orbit of the final stretching stage 14 so as to shrink once in the first place and to then get back as before. In particular, the final stretching stage 14 is the stage in which the film stretching stress is strongly exerted on the film in the surface direction thereof, and hence the operation in which the stretching is once relaxed in the longitudinal direction on the way of the stretching and then the stretching is again performed as before affects significantly adversely the stretching deformation behavior of the whole film surface in the stretching zone.

Detailed description is made on this point. The simultaneous biaxial stretching has a mechanism to stretch the film simultaneously in the biaxial directions, namely, both in the longitudinal direction and in the transverse direction. In other words, the simultaneous biaxial stretching method is the stretching method in which the following two stretching operations are performed simultaneously: one is the stretching (acceleration) in the film traveling direction as the longitudinal stretching, performed by gradually expanding the separation between the adjacent clips in the sequence of the clips being disposed on the right side and the left side of the film traveling direction and traveling while gripping the film edges; and the other is the stretching in the widthwise direction as the transverse stretching, performed by gradually expanding the inter-clip distance between the clips disposed so as to face each other on the right side and the left side of the film traveling direction. In this case, the stretching magnification factor variations in the longitudinal direction and the transverse direction, each undergoing mechanical gradual expansion, affect the actual film deformation in a manner correlated with each other. This is because when the stretching deformation in the longitudinal (or transverse) direction, a contraction stress is exerted in the direction perpendicular to this direction, namely, the transverse (or longitudinal) direction. In other words, in addition to the uniaxial stretching stress in the longitudinal (or transverse) direction, the contraction stress in the direction perpendicular to this direction is exerted on the film surface, and thus the two different stresses are exerted on the film surface simultaneously in a manner correlated with each other.

If the longitudinal stretching magnification factor exhibits such a variation that the longitudinal stretching magnification factor is temporarily decreased on the way of the stretching, then gets back as before and is increased, the stretching stress decrease temporarily occurs, and the stress decrease is extended to the transverse direction together with the stress relaxation in the longitudinal direction; thus, even when the longitudinal stretching magnification factor again gets back as before, the stretching stress before the decrease of the longitudinal stretching magnification factor and the stretching stress attained when the stretching magnification factor again gets back as before reside in equilibrium with each other in the stretched portion of the film. The transverse stretching magnification factor has already been grown, and consequently, in the stretched portion in which the constituents of the material constituting the film pull each other, the stretching unevenness based on the non-uniform area magnification factor occurs under stress equilibrium. In particular, when thickness unevenness occurs in the film, a thick portion in which the stretching stress is low results in passing through the stretching zone of the stretching machine as it is without reaching the maximum stretching magnification factor. Consequently, the thickness unevenness augmentation factor of the stretched film is increased. The details of the "thickness unevenness augmentation factor" are described below. This phenomenon is remarkable particularly in polyamide resin films.

In the film having a non-uniform area magnification factor (having a large thickness unevenness augmentation factor), the portion having a lower area magnification factor has a lower refractive index in the thickness direction and the portion having a higher area magnification factor has a higher refractive index in the thickness direction, and hence a large variation of the refractive index occurs. In particular, when the central portion and the edges of a film roll are different in the refractive index in the thickness direction of the film, consequently the contraction difference in the slant direction significantly varies, and at the time of bag making, a bag remarkable in the S-shaped curl is resulted to offer a cause of unsuccessful filling-up or the like.

The gist of the process for production in the present invention resides in that on the way of simultaneous biaxial stretching, the stress decrease due to the distortion of the longitudinal stretching magnification factor trace should be made not to exceed an allowable limit.

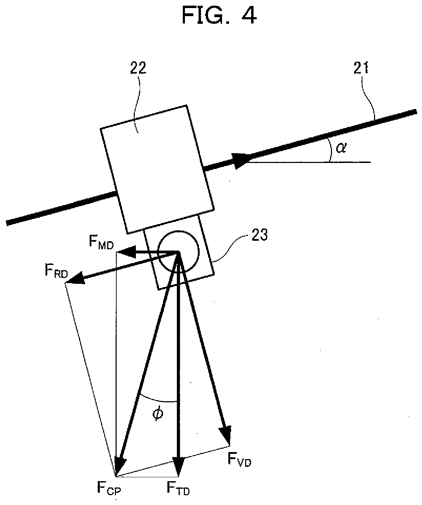

The stress in the stretching zone can be analyzed, for example, by measuring the film stretching stress exerted on the clip. FIG. 4 shows the film stretching stress components and the vector synthesis stress exerted on the clip, the inclination of the vector synthesis stress, and the relationships between these.

Here, the stress $F_{RD}$ (the reverse direction stress is $-F_{RD}$) exerted on the tangential traveling direction of the traveling movement of the clip 23 and the stress $F_{VD}$ exerted on the normal direction of the traveling movement of the clip can be actually measured, and hence from the traveling movement angle $\alpha$ of the clip 23, the stress component $F_{MD}$ (the reverse direction stress component is $-F_{MD}$) in the longitudinal traveling direction and the stress component $F_{TD}$ in the transverse direction, and furthermore, the vector synthesis stress $F_{CP}$ and the inclination $\phi$ of $F_{CP}$ can be calculated. The stress $F_{CP}$ is the stress exerted on the clip 23 from the film, and means the magnitude of the stress given to the film from a reverse point of view.

In the present invention, it is important that until the transverse stretching magnification factor trace reaches the maximum magnification factor, the longitudinal stretching magnification factor trace be prevented from being decreased by 5% or more of the maximum stretching magnification factor, and thus the vector synthesis stress $F_{CP}$ be prevented from being decreased to such an extent that the quality of the obtained film is adversely affected.

The actual detection of the stretching stress is made possible as follows: a sensor such as a strain gauge or a piezoelectric element is attached to the pedestal of the clip 23 gripping the edge of the film or the arm connecting the bearing unit of the support 22 traveling along the rail 21 to the unit of the clip 23, and the sensor signal is analyzed on a computer.

For the purpose of preventing the longitudinal stretching magnification factor trace from being decreased to exceed the allowable limit, the distortion of the above-described longitudinal stretching magnification factor trace has only to be corrected.

When the longitudinal stretching magnification factor trace is not decreased to exceed the allowable limit, the higher magnification factor (higher stretching stress) portion in the film always acts to stretch, one portion to another, the lower magnification factor (lower stretching stress) portion in the film, and consequently a film uniform in the stretching history can be obtained.

A specific correction method is as follows. For example, in the linear motor-type simultaneous biaxial stretching apparatus described in JP51-33590B, an independently-traveling clip support moves by being pulled by the moving magnetic field generated by the fixed inductors of the plurality of linear motors disposed along a rail. By varying the frequency of the alternating current supplied to the field coil of the fixed inductor, the traveling speed of each of the clip supports can be individually regulated to be increased or decreased, and hence by modifying the frequency of each of the linear motor drivers, the distortion of the longitudinal stretching magnification factor trace can be corrected.

In a mechanical simultaneous biaxial stretching machine such as a pantograph-type simultaneous biaxial stretching machine described in JP45-6785B (utility model), an endless link device formed of endlessly connected link units is driven by a sprocket while the endless link device is being regulated by a pair of guide rails respectively disposed along one widthwise edge and the other widthwise edge of the film. The longitudinal stretching mechanism which stretches the inter-clip distances of the clips fixed to the link units has a structure to be regulated by gradually narrowing the separation of the pair of guide rails. Therefore, by correcting the guide rail orbits, or by continuously varying the curvature radius of the curved orbits of the guide rails, the distortion of the longitudinal stretching magnification factor trace can be corrected.

The method for correcting the distortion of the longitudinal stretching magnification factor trace can adopt other various methods, and is not limited to the above-described methods. For example, it is also effective to bring the attachment positions of the clips 23 as closer as possible to the traveling orbit of the support 22.

The technique for preventing the degradation of the longitudinal stretching magnification factor trace of the present invention can be applied in combination with the countermeasure against the bowing in which counter measure the longitudinal stretching magnification factor trace is made to precede the transverse stretching magnification factor trace. The fact that the longitudinal stretching magnification factor trace is made to precede the transverse stretching magnification factor trace means as described above that at any given point in time during stretching, the magnification factor of the longitudinal stretching at the given point in time relative to the maximum stretching magnification factor of the longitudinal stretching is made higher than the magnification factor of the transverse stretching at the given point in time relative to the maximum stretching magnification factor of the transverse stretching. In other words, the fact that the longitudinal stretching magnification factor trace is made to precede the transverse stretching magnification factor trace means that the longitudinal stretching magnification factor exhibits a higher value than the transverse stretching magnification factor at any given point along the longitudinal direction of the film during the stretching step, namely, at every point along the longitudinal direction of the film during the stretching step, under the conditions that the magnification factor variations are normalized, the stretching magnification factor at the stretching starting point is set at 0 and the stretching magnification factor at the stretching completion point is set at 1. This technique as a countermeasure against the bowing is described in detail in above-described JP2002-370278A according to the application of the present applicants.

In the present invention, the longitudinal stretching magnification factor of the simultaneous biaxial stretching is preferably 2.5 or more and 4.5 or less, and the ratio between the longitudinal stretching magnification factor and the transverse stretching magnification factor is 0.5 or more and 1.5 or less. This range is the biaxial stretching magnification factor range of the simultaneously biaxially stretched film, put into practical use for the purpose of imparting sufficient orientation, and the range which remarkably enables to be attained the effect, as the gist of the present invention, of preventing the longitudinal stretching magnification factor trace from being decreased by 5% or more of the maximum magnification factor, namely, the effect to perform uniformly stretching. This stretching magnification factor range renders the present invention particularly useful.

The curve of the transverse stretching magnification factor relating to the distortion of the longitudinal stretching magnification factor trace is not particularly limited, and can be set with a quadratic or cubic function, a trigonometric function, a combination of circular arc and straight line or a curved line, or a combination of these or the like.

The simultaneous biaxial stretching in the present invention can be performed with a pantograph-type tenter, a screw-type tenter, a linear motor-type tenter or the like. As a specific example of such an apparatus, most preferable is such a tenter as described above with individual clips independently driven by a linear motor system, from the viewpoint that such a tenter has a flexibility enabling optional control of the longitudinal stretching magnification factor variation on the basis of control of a frequency variable driver. In other words, a tenter of this type has an advantage that the regulation to correct the distortion of the longitudinal stretching magnification factor trace is easy and the curve of the longitudinal stretching magnification factor trace can be selected finely and freely.

Description is made on the polyamide resin film of the present invention.

In the polyamide resin film of the present invention, the thickness unevenness augmentation factor thereof is required to be 3.5 or less, and is preferably 2.5 or less.

The thickness unevenness augmentation factor as referred to in the present invention means the augmentation factor obtained by comparing between the coefficient of variation of the thickness of the unstretched film of unit length and the coefficient of variation of the thickness of the stretched film obtained by stretching the unstretched film of unit length. The coefficient of variation is the ratio of the standard deviation to the average and is a statistical term representing the variation of the data.

In more detail, the coefficient of variation of the film thickness as referred to in the present invention means the following. Specifically, the thickness of an unstretched film is measured at n positions with a predetermined separation pitch p in the widthwise direction of the film, and this type of measurement is performed at m positions with a predetermined interval of d along the lengthwise direction of the film, and thus the thickness of the unstretched film is measured at n x m = nm positions in total. Then, from the whole obtained data, the standard deviation and the arithmetic mean are derived, and subsequently the coefficient of variation is derived to be defined as the coefficient of variation $C_{AD}$ of the thickness of the unstretched film. Next, the thickness of a film having been biaxially stretched is measured at n positions with a pitch of [p × transverse stretching magnification factor × relaxation ratio] in the widthwise direction, this type of measurement is performed at m positions with an interval of [d × longitudinal stretching magnification factor × relaxation ratio] along the lengthwise direction of the film. Then, from the whole obtained data (at n × m positions), the coefficient of variation is similarly derived to be defined as the coefficient of variation $C_{BO}$ of the thickness of the stretched film. Then, the ratio of $C_{BO}$ to the above-described $C_{AD}$, ($C_{BO}/C_{AD}$), is derived to be defined as the thickness unevenness augmentation factor.

The thickness unevenness augmentation factor indicates the extent of how the thickness of the film varies depending on the positions in the film when the film is stretched. When the thickness unevenness augmentation factor is 3.5 or less, a film without slackening and wrinkling is obtained at the time of film processing, no trouble occurs in the vapor-deposition processing step or the lamination step, and thus products can be produced with a satisfactory productivity. Additionally, such a film allows approximately the whole width of the produced film to be converted into products to result in a high productivity.

When the thickness unevenness augmentation factor exceeds 3.5, it is difficult to produce a long film roll exceeding 30000 m. Even if such a film roll can be produced, slackening or wrinkling tends to occur at the time of processing such as vapor deposition processing, printing processing or lamination processing.

Therefore, the thickness unevenness augmentation factor is required to be measured and evaluated for the whole width of the film roll for the processing such as vapor deposition or printing.

Next, description is made on the variation rate, over the whole surface of the film, of the refractive index in the thickness direction of the film. In the polyamide resin film of the present invention, the variation rate of the refractive index in the thickness direction of the film, over the whole surface, including the variation rate in the lengthwise direction of the film and the variation rate in the widthwise direction of the film, is required to be 0.5% or less, and is preferably 0.25% or less and more preferably 0.19% or less.

The variation rate of the refractive index in the thickness direction of the film, over the whole surface, as referred to in the present invention means the following. Specifically, samples are cut out at a plurality of locations over the whole width of a stretched film, and this type of cutting out is performed at a plurality of positions along the lengthwise direction of the film, with a predetermined interval to yield a large number of specimens. Then, each of the thus obtained specimens is subjected to a measurement of the refractive index in the thickness direction of the specimen. From the data thus obtained from the large number of positions, the average refractive index, the maximum refractive index and the minimum refractive index are derived; then, on the basis of the following formula, the value involving the larger difference from the average refractive index is defined as the variation rate of the refractive index.

$$
\begin{aligned}
\text{Variation rate} = (|\text{maximum refractive index or} \\
\text{minimum refractive index} - \text{average refractive index}| \times \\
100)/\text{average refractive index}
\end{aligned}
$$

The variation rate of the refractive index in the thickness direction of the film over the whole surface indicates the degree of the dispersion in the stretching depending on the positions of the film.

Specifically, the refractive index in the thickness direction is different depending on the resin constituting the film, and accordingly it is not significant to specify the value of the concerned refractive index itself. This is because, for example, the concerned refractive index of nylon 6 is 1.504 to 1.505, but the addition of poly(meta-xylylene adipamide) or the like to nylon 6 increases the concerned refractive index. However, the refractive index in the thickness direction is gradually decreased as the unstretched film is stretched, and hence the refractive index in the thickness direction serves as an index of stretching. In other words, the variation of the refractive index in a film has some significance; by reducing both of the variation of the above-described refractive index in the lengthwise direction of the film and the variation of the above-described refractive index in the widthwise direction of the film, the film is made excellent with a satisfactory balance between the physical properties in the longitudinal direction and the physical properties in the transverse direction. Consequently, at the time of printing and bag-making, none of printing mismatch, twisting of bag-making products and the like occurs, and thus satisfactory products are obtained.

When the variation rate of the refractive index in the thickness direction over the whole surface falls outside the above-described range, the film is made poor in the balance between the physical properties in the longitudinal direction and the physical properties in the transverse direction. In such a film, at the time of printing and bag-making, printing mismatch, twisting of bag-making products and the like occur, and thus the defection rate of the bag-making processing is made high.

From such a viewpoint as described above, the variation rate of the refractive index in the thickness direction over the whole surface is required to be measured and evaluated for the whole width of the film roll when the processing such as vapor deposition or printing is performed.

Examples of the polyamide resin used in the present invention may include nylon 6 using s-caprolactam as the main starting material. Alternatively, examples of other polyamide resins may include the polyamide resins obtained by polycondensation of three or higher-membered ring lactams, ω-amino acids, dibasic acids, diamines and the like.

Specific examples of the lactams may include, in addition to the aforementioned ε-caprolactam, enantholactam, capryllactam and lauryllactam. Specific examples of the ω-amino acids may include 6-aminocaproic acid, 7-aminoheptanoic acid, 9-aminononanoic acid and 11-aminoundecanoic acid. Specific examples of the dibasic acids may include adipic acid, glutaric acid, pimelic acid, suberic acid, azelaic acid, sebacic acid, undecanedioic acid, dodecanedioic acid, hexadecanedioic acid, eicosanedioic acid, eicosadienedioic acid, 2,2,4-trimethyladipic acid, terephthalic acid, isophthalic acid, 2,6-naphthalenedicarboxylic acid and xylylenedicarboxylic acid. Specific examples of the diamines may include ethylenediamine, trimethylenediamine, tetramethylenediamine, hexamethylenediamine, pentamethylenediamine, undecamethylenediamine, 2,2,4(or 2,4,4)-trimethylhexamethylenediamine, cyclohexanediamine, bis-(4,4'-aminocyclohexyl)methane and meta-xylylenediamine.

The polymers or the copolymers obtained by polycondensation of the above-described compounds, such as nylon 6, 7, 11, 12, 6.6, 6.9, 6.11, 6.12, 6T, 6I, MXD6 (meta-xylene adipamide), 6/6.6, 6/12, 6/6T, 6/6I and 6/MXD6, can be used. Additionally, when the polyamide resin film of the present invention is produced, the above-described polyamide resins can be used each alone, or as mixtures of two or more thereof or as multiple layers of two or more thereof.

Particularly preferable, in the present invention, among the above-described polyamide resins are the polyamide resins each having a relative viscosity falling within a range from 2.0 to 3.5. This is because the relative viscosity of the polyamide resin affects the toughness, ductility and the like of the obtained biaxially stretched film, a polyamide resin having a relative viscosity of less than 2.0 tends to result in an insufficient impact resistance, and on the contrary, a polyamide resin having a relative viscosity exceeding 3.5 tends to cause a poor biaxial stretchability due to the increase of the stretching stress. The relative viscosity as referred to herein means the value obtained when the measurement is performed at 25°C by using a solution prepared by dissolving a polymer in 96% sulfuric acid in a concentration of 1.0 g/dl.

To the polyamide resin film of the present invention, various additives such as a lubricant, a blocking preventing agent, a heat stabilizer, an antioxidant, an antistatic agent, a light-resistant agent and an impact resistance improver may also be added within a range not to largely impair the properties of the polyamide resin film. In particular, for the purpose of improving the slipping property of the biaxially stretched film, the polyamide resin film is preferably made to contain various inorganic particles as lubricants. Additionally, the addition of organic lubricants such as ethylene-bis-stearic acid to display the effect of lowering the surface energy preferably makes excellent the slipping property of the film constituting the film roll. The addition amount of the lubricant is preferably set within a range from 0.01 to 1% by mass.

Further, the polyamide resin film of the present invention may also be subjected to a heat treatment or a humidity conditioning treatment for the purpose of improving the dimensional stability of the film according to the intended use. Additionally, for the purpose of improving the adhesiveness of the film surface, a corona treatment, a coating treatment, a flame treatment and the like may be performed, and a processing such as printing may also be performed.

The film of the present invention may have a structure in which other layer is laminated on a polyamide resin film as the substrate member. Hereinafter, description is made on a first embodiment of the laminated polyamide resin film.

Also in the case of this laminated polyamide resin film, when the thickness unevenness augmentation factor is large, naturally the thickness unevenness augmentation factor of the laminated portion is large. Consequently, non-uniformity is caused in the adhesion strength, the charging performance, the gas-barrier performance and the like of the film surface, and thus no stable products are obtained.

Description is made on the adhesion strength of the film surface layer. The laminated polyamide resin film of the present invention is preferably 10% or less, more preferably 8.0% or less and furthermore preferably 5.0% or less in the variation rate of the adhesion strength over the whole surface including the variation in the lengthwise direction of the film and the variation in the widthwise direction of the film in the adhesion strength of the film surface layer.

The measurement of the adhesion strength is performed as follows: a laminated polyamide resin film prepared by laminating a laminated portion on the polyamide resin film constituting the substrate member of the laminated film is used as a specimen film; an unstretched polypropylene film is laminated on the surface of the laminated portion of the specimen film through the intermediary of a laminate adhesive; and then, the polyamide resin film of the substrate member and the polypropylene film are gripped and are peeled at the interlayer from each other for the adhesion strength measurement.

In the present invention, the adhesion strength of the film surface layer refers to the strength for the delamination which occurs in any one of the following three interfaces: (i) the interface between the polyamide resin film constituting the substrate member of the laminated polyamide resin film and the laminated portion of the laminated polyamide resin film; (ii) interface between the laminated portion and the laminate adhesive layer; and (iii) the interface between the adhesive layer and the polypropylene film.

In this case, even when the delamination occurs at any of the above-described interfaces (i), (ii) and (iii), the measured value is taken as the adhesion strength between the polyamide resin film of the substrate member and the laminated portion in the present invention. This is because when the delamination occurs at the interface (ii) or the interface (iii), the interface (i) can be assumed to undergo adhesion with a strength at least larger than the adhesion strength measured at this time.

When, in the measurement, the polyamide film of the substrate member or the laminated polypropylene film undergoes material failure, the adhesion strength in the present invention is determined by adopting the numerical value obtained under the conditions that a pressure-sensitive adhesive tape (Nitto polyester tape No. 31B, manufactured by Nitto Denko Corp.) is bonded for reinforcement to the back side of any one of or each of the above-described films so as to prevent the material failure.

The variation rate of the adhesive strength over the whole film surface is derived as follows. Samples are cut out at a plurality of positions over the whole width of a stretched film, and this cutting out is performed at a plurality of positions with a predetermined interval along the lengthwise direction of the film, and thus a large number of specimens are obtained. Then, the peel strength of each of the thus obtained specimens is measured; from the data thus obtained at a large number of positions, the average adhesion strength, the maximum adhesion strength and the minimum adhesion strength are derived, and then, on the basis of the following formula, the value involving the larger difference from the average is defined as the variation rate of the adhesion strength.

```
Variation rate = (|maximum adhesion strength or
minimum adhesion strength - average adhesion strength| x
100)/average adhesion strength
```

In the case where the variation rate of the adhesion strength exceeds 10%, when contents are filled in a lamination printed bag produced by processing from such a film and subsequently the bag undergoes an impact such as dropping, stress concentration occurs in the portion low in adhesion strength to result in an increased bag-breaking rate.

Description is made on the gas-barrier property of the film. The laminated polyamide resin film of the present invention is preferably 15% or less, more preferably 10% or less and furthermore preferably 5.0% or less in the variation rate of the oxygen permeability of the film over the whole surface including the variation in the lengthwise direction of the film and the variation in the widthwise direction of the film , in the case where the laminated portion laminated on the polyamide resin film as the substrate layer is the barrier property displaying layer. In the case where the variation rate of the oxygen permeability exceeds 15%, when contents are filled in a bag produced by processing from such a film, it is difficult to thereafter attain an intended contents-preservation performance in the portion having a poor oxygen permeability.

Examples of the resin used as the laminated portion of the laminated polyamide resin film of the present invention may include a polyvinylidene chloride copolymer resin, a polyester resin, a polyurethane resin, a polyacrylic resin, a polyvinyl alcohol resin, a polycarboxylic acid resin, an olefin-polycarboxylic acid copolymer resin and an ethylene-vinyl acetate copolymer resin. Additionally, the above-described resins may be used each alone, or as the mixture of one or more of the above-described resins with another resin. Particularly preferable in the present invention among the above-described resins are the polyvinylidene chloride copolymer resin, the olefin-polycarboxylic acid copolymer resin, the polyurethane resin and the like.

Preferably, the resins used in the laminated portion are applied as a solution or a latex to the polyamide resin film constituting the substrate layer, and thus the laminated portion is formed.

When the latex is used, a so-called precoating method in which the latex is applied to the substrate layer film before completion of orientation crystallization and then treated with the high heat amount at the time of stretching of the film may be preferably used on the ground that the gas-barrier property of the formed latex coating film or the adhesion to the substrate layer film is enhanced. The latex is applied to the substrate layer film and dried, and thus the medium of the latex is evaporated and the latex develops a closest packing structure. Further, by stretching the substrate layer film, the latex itself is deformed, fusion bonded and converted into a condition of a continuous coating film while the latex itself is being stretched.

In this stretching process, the latex coating film tends to be seriously affected by the stretching stress of the substrate layer film itself. When the stretching stress decrease or the like occurs in the polyamide resin film of the substrate layer, a stressed strain occurs between the polyamide resin film and the latex coating film, and an adhesion failure tends to occur between the polyamide resin film and the latex coating film. Additionally, when stretching unevenness due to the difference in area magnification factor occurs in the polyamide resin film, the latex coating film itself naturally undergoes stretching unevenness, to result in a poor uniformity of the degree of the thermal fusion bonding of the latex or in a poor uniformity of the condition of the continuous coating film. Consequently, when the a printing ink layer or a laminate adhesive layer is formed on the latex coating film, the adhesion strength to the printing ink layer or the laminate adhesive layer is also affected.

The polyvinylidene chloride copolymer usable in the present invention can be obtained as a latex dispersed in a medium by polymerizing, with a known emulsion polymerization method, 50 to 99% by mass of vinylidene chloride and 1 to 50% by mass of one or more other monomers copolymerizable with vinylidene chloride. The proportion of the copolymerizable monomer(s) is less than 1% by mass, the plasticization within the resin is insufficient and the film formability of the coating film is degraded. Alternatively, when the proportion of the monomer(s) exceeds 50% by mass, the gas-barrier property is degraded.

Examples of the above-described monomer copolymerizable with vinylidene chloride include: vinyl chloride; acrylic acid esters such as methyl acrylate, ethyl acrylate, butyl acrylate, 2-ethylhexyl acrylate and 2-hydroxyethyl acrylate; methacrylic acid esters such as methyl methacrylate and glycidyl methacrylate; acrylonitrile and methacrylonitrile; and unsaturated carboxylic acids such as acrylic acid, methacrylic acid, itaconic acid and maleic acid. One or two or more of these monomers can be selected to be used.

The polyvinylidene chloride copolymer can be used further in combination with other one or more resins. Examples of other resins include ethylene-vinyl acetate copolymer, (meth)acrylic acid ester copolymer, methyl methacrylate-butadiene-styrene copolymer, acrylonitrile copolymer and methyl vinyl ether-maleic anhydride copolymer. One or two or more of these resins can be selected to be used.

The solid content concentration of the polyvinylidene chloride copolymer latex can be appropriately modified according to the specifications of the coating apparatus and the drying-heating apparatus. However, when a too dilute solution is used, disadvantageously the drying step tends to take a long time. On the other hand, when the concentration of the latex is too high, film formation tends to progress during storage to reduce the liquid pot life, and coatability tends to suffer from troubles. From such viewpoints, the solid content concentration of the polyvinylidene chloride copolymer latex falls preferably within a range from 10 to 70% by mass and more preferably within a range from 30 to 55% by mass.

The application of the polyvinylidene chloride copolymer latex to the substrate film can be performed at any stage in the production process of the unstretched film for obtaining the substrate film. Examples of such an application may include a method in which the polyvinylidene chloride copolymer latex is applied to the substrate film, and then the thus treated substrate film is subjected as it is simultaneously to the stretching treatment and the coating film forming treatment. Alternatively, examples of such an application may include a method in which after the polyvinylidene chloride copolymer latex is applied, the thus treated substrate film is subjected to a step in which the water in the polyvinylidene chloride copolymer latex is evaporated for drying by blowing of hot air with a dryer or the like, by irradiation of infrared ray or by the like, and then the substrate film is subjected simultaneously to the stretching treatment and the coating film forming treatment. The temperature of the water evaporation and drying step is preferably 70°C to 150°C, and more preferably within a range from 80°C to 120°C where the film formability of the polyvinylidene chloride copolymer latex is satisfactory. When the drying temperature is lower than 70°C, the film formability is degraded, and when the drying temperature exceeds 150°C, the temperature increase in the latex is sharp to induce phenomena such as bumping and no uniform coating film is obtained. The water evaporation and drying step may be divided into substeps different from each other in temperature. The time allotted to the treatment substep of the highest temperature among such substeps is optionally selected according to the thickness of the substrate film or the thickness of the polyvinylidene chloride copolymer layer, the solid content amount of the latex, the specific heat of the latex or the like. Usually, the allotted time is 0.01 to 120 seconds and preferably 1 to 80 seconds. When the allotted time is less than 0.01 second, the evaporativity of the water of the polyvinylidene chloride copolymer latex tends to be poor, or the film formation of the coating film of the polyvinylidene chloride copolymer latex tends to be insufficient. When the allotted time exceeds 120 seconds, the crystallization of the polyamide resin tends to be accelerated excessively to preclude the stretched film production as the case may be, or the adhesion of the polyamide resin to the latex coating film tends to be disadvantageously affected.

The method for applying the material constituting the laminated portion of the laminated polyamide resin film of the present invention to the polyamide resin film for forming the substrate layer is not particularly limited. Usable as such a method are common methods such as gravure roll coating, reverse roll coating, wire bar coating, air knife coating, die coating and curtain die coating.

In the laminated polyamide resin film of the present invention, the thickness of the laminated portion is preferably 0.1 to 3.0 $\mu$m and more preferably 0.5 to 2.0 $\mu$m. When the thickness of the coating film is less than 0.1 $\mu$m, the adhesiveness and the gas-barrier property tend to be degraded. On the other hand, when the thickness of the coating film exceeds 3.0 $\mu$m, the film formability is degraded and the exterior appearance of the coating film tends to be impaired.

Description is made on a second embodiment of the laminated polyamide resin film.

The second embodiment of the polyamide resin laminated film of the present invention is a laminated film having a structure in which on at least one side of a first resin layer (X) as the barrier layer, a second resin layer (Z) as the substrate layer is laminated, the first resin layer (X) is formed of any one of a polyamide resin (A) formed of a xylylenediamine component and an aliphatic dicarboxylic acid component having 4 to 12 carbon atoms and a saponified product of an ethylene-vinyl acetate copolymer, and the second resin layer (Z) is formed of a polyamide resin (B).

Examples of the polyamide resin (A) contained in the first resin layer (X) may include a polyamide resin obtained by a polycondensation reaction from a xylylenediamine component, namely, meta- and/or para-xylylenediamine and an aliphatic dicarboxylic acid having 4 to 12 carbon atoms. Particularly preferable is poly-meta-xylylene adipamide (MXD6) synthesized from meta-xylylenediamine and adipic acid. Additionally, in the first resin layer (X), for the purpose of improving the inter-layer peel strength with the second resin layer (Z) as the substrate layer, the polyamide resin (B) constituting the second resin layer (Z) may be contained in an amount of less than 20% by mass.

Preferable as the saponified product (EVOH) of the ethylene-vinyl acetate copolymer is a product in which the content of the ethylene component is 20 to 50 mol% and preferably 27 to 44 mol%, the degree of saponification of the vinyl acetate component is 96 mol% or more and preferably 99 mol% or more because such a product is excellent in the gas-barrier property and the strength. To EVOH, as long as the properties of EVOH are not impaired, the following may be added: a resin having an affinity with EVOH, an antioxidant, a plasticizer, an antistatic agent, a lubricant, a coloring agent, a filler and the like.

The polyamide resin (A) or EVOH is preferably contained in the resin constituting the first resin layer (X) as the barrier layer in a content of 80% by mass or more. When the content is less than 80% by mass, the required barrier performance is hardly attained. Accordingly, the polyamide resin (A) or EVOH is furthermore preferably contained in a content of 90% by mass or more.

Examples of the polyamide resin (B) constituting the second resin layer (Z) as the substrate layer may include the above-described resins inclusive of nylon 6 and the like.

For each of the polyamide resin (A) and the polyamide resin (B) constituting the laminated polyamide resin film of the present invention, the above-described relative viscosity is likewise preferably 2.0 to 3.5.

With each of the polyamide resin (B) and the polyamide resin (A), another polyamide or a thermoplastic resin may be mixed. In this case, the mixing amount of the substance for mixing is preferably 20% by mass or less of the resin layer (Z) or the resin layer (X). In particular, the lamination of the polyamide resin (A) to function as a barrier layer degrades the impact resistance of the whole laminated film as the case may be, and hence, for the purpose of compensating such a degradation, it is preferable to add to the resin layer (X) or/and the resin layer (Z) 0.5 to 20% by mass of a thermoplastic elastomer. Examples of the thermoplastic elastomer include polyamide elastomers such as block or random copolymers between a polyamide resin such as nylon 6 or nylon 12 and PTMG (polytetramethylene glycol), PEG (polyethylene glycol) or the like; polyolefin elastomers such as ethylene-(meth)acrylic acid ester copolymer, ethylene-butene copolymer and styrene-butadiene copolymer; and ionomers of olefin resins such as ethylene-based ionomers.

To the polyamide resin (A) and the polyamide resin (B), various additives such as a lubricant, a blocking preventing agent, a heat stabilizer, an antioxidant, an antistatic agent, a light-resistant agent and an impact resistance improver may also be added within a range not to impair the properties of the polyamide resins. In particular, for the purpose of improving the slipping property of the biaxially stretched film, these polyamide resins are preferably made to contain various inorganic particles as lubricants. Additionally, the addition of organic lubricants such as ethylene-bis-stearic acid to display the effect of lowering the surface energy preferably makes excellent the slipping property of the film constituting the film roll. For these purposes, the addition amount of the lubricant is preferably set within a range from 0.01 to 1% by mass.

In particular, when the first resin layer (X) as the barrier layer is constituted with the polyamide resin (A), for the purpose of improving the inter-layer peel strength with the second resin layer (Z) as the substrate layer, it is preferable to additionally dispose an adhesive layer (Y) between the first resin layer (X) and the second resin layer (Z). Preferable as the resin constituting the adhesive layer (Y) is a mixture of the polyamide resin (A) and an amorphous polyamide resin or a mixture of the polyamide resin (A) and the polyamide resin (B). The proportion of the amorphous polyamide resin or the polyamide resin (B) in the adhesive layer (Y) is preferably 5 to 90% by mass, more preferably 20 to 80% by mass and furthermore preferably 40 to 70% by mass.

The amorphous polyamide resin as referred to herein is a generic name for polyamide resins having no crystallinity or polyamide resins having poor crystallinity. Such an amorphous polyamide resin is not particularly limited as long as such an amorphous resin is poor in crystallinity, and examples of such an amorphous polyamide resin generally include polymers composed of monomer components having a crystallization-disturbing structure, namely, monomer components having a side chain or a ring structure. Examples of such polymers may include polyamides each obtained by the reaction between a dicarboxylic acid such as terephthalic acid or isophthalic acid and a diamine such as hexamethylenediamine, 4,4'-diamino-3,3'-dimethyl-dicyclohexylenemethane, 4,4'-diamino-dicyclohexylenepropane or isophoronediamine. Alternatively, examples of such polymers may include polyamides each obtained by further copolymerizing, in addition to the above-described components, a lactam component and an isocyanate component such as 4,4'-diphenylmethane-diisocyanate.

The laminated polyamide resin film of the second embodiment of the present invention is a laminated film in which at least on one side of the first resin layer (X) as the barrier layer mainly composed of the polyamide resin (A) or EVOH, the second resin layer (Z) as the substrate layer mainly composed of the polyamide resin (B) is laminated. Examples of the configurations of the lamination include Z/X, Z/X/Z and X/Z/X or the configurations in which the adhesive layer (Y) is added to these configurations, namely, Z/Y/X/Y/Z and X/Y/Z/Y/X. Preferable among these is the configuration incorporating the barrier layer (X) as an intermediate layer, namely, Z/X/Z or Z/Y/X/Y/Z.

The thickness of the individual layers in the laminated polyamide resin film of the second embodiment of the present invention may be such that: the thickness of the second resin layer (Z) constituted with the polyamide resin (B) is approximately usually 2 to 35 μm and preferably 3 to 20 μm; the thickness of the first resin layer (X) as the barrier layer is approximately usually 1 to 20 μm and preferably 2 to 15 μm; and the thickness of the adhesive layer (Y) is approximately usually 0.3 to 10 μm and preferably 0.5 to 5 μm.

Also in the laminated polyamide resin film of the second embodiment of the present invention, the thickness unevenness augmentation factor thereof is required to be 3.5 or less and is preferably 2.5 or less.

Also in the laminated polyamide resin film of the second embodiment of the present invention, the variation rate of the refractive index in the thickness direction of the film, over the whole surface, including the variation rate in the lengthwise direction of the film and the variation rate in the widthwise direction of the film, is required to be 0.5% or less, and is preferably 0.25% or less and more preferably 0.19% or less.

The laminated polyamide resin film of the second embodiment of the present invention may also be subjected to a heat treatment or a humidity conditioning treatment for the purpose of improving the dimensional stability of the film according to the intended use. Additionally, for the purpose of improving the adhesiveness of the film surface, a corona treatment, a coating treatment, a flame treatment and the like may be performed, and a processing such as printing may also be performed.

A laminate can be formed from the polyamide resin film of the present invention, by laminating an adhesive layer on the polyamide resin film directly or through the intermediary of a printing ink layer and by further laminating a heat sealing layer on the adhesive layer. For the purpose of improving the adhesion between the film and the adhesive layer or the printing ink layer, a surface treatment such as a corona treatment or an ozone treatment may be performed.

Examples of the printing ink layer may include the layers formed with the inks prepared by adding to the ink binder resins having been used such as a urethane, acrylic, nitrocellulose, rubber and vinyl chloride ink binder resin, various additives such as various pigments, an extender pigment, a plasticizer, a drying agent and a stabilizer. The printing ink layer may be a layer in which letters, pictorial patterns and the like are represented with the above-described inks. Usable as the method for forming the printing ink layer are the well known printing methods such as offset printing, gravure printing and silk screen printing, and the well known coating methods such as roll coating, knife edge coating and gravure coating.

Examples of the coating agent used for the formation of the laminate adhesive layer may include the known coating agents such as isocyanate, polyurethane, polyester, polyethyleneimine, polybutadiene, polyolefin and alkyl titanate coating agents. In consideration of the effects such as the adhesiveness, the heat resistance, the water resistance and the like, preferable among these are the isocyanate, polyurethane and polyester coating agents. In particular, preferable are: isocyanate compounds; a mixture and a reaction product of one or two or more of polyurethane and urethane prepolymers; a mixture and a reaction product between one or two or more of polyester, polyol and polyether and an isocyanate; and the solutions and the dispersions of these. For the purpose of sufficiently enhance the adhesion of the laminate adhesive layer to the heat sealing layer, the thickness of the laminate adhesive layer is preferably made to be larger than at least 0.1 $\mu$m. The method for forming the laminate adhesive layer is not particularly limited, and usable are the common methods such as gravure roll coating, reverse roll coating, wire bar coating and air knife coating.

The heat sealing layer is used as the thermal adhesion layer when a packaging bag or the like is formed by using the polyamide resin film of the present invention and is formed of a material capable of being sealed by heat sealing, high-frequency sealing or the like. Examples of such a material include low-density polyethylene, linear low-density polyethylene, high-density polyethylene, ethylene-vinyl acetate copolymer, polypropylene, ethylene-acrylic acid copolymer, ethylene-acrylic acid salt copolymer and ethylene-acrylate copolymer. The thickness of the heat sealing layer can be determined according to the purpose, and is generally preferably 15 to 200 $\mu$m.

As the method for forming the laminate adhesive layer, known methods may be used. Examples of such a method include: lamination methods such as a dry lamination method, a wet lamination method, a solvent-free dry lamination method and an extrusion lamination method; a coextrusion method in which two or more resin layers are extruded simultaneously to be laminated with each other; and a coating method in which a film is produced by using a coater or the like. In consideration of the adhesiveness, the heat resistance, the water resistance and the like, preferable among these are the dry lamination method.

EXAMPLES

The evaluation methods of the various physical properties, used in following Examples and Comparative Examples are presented below.

(1) Thickness unevenness augmentation factor

The thickness of an unstretched film was measured with a pitch of 5 mm in the widthwise direction. This measurement was performed at 10 positions along the lengthwise direction with an interval of 10 m. From the total data thus obtained, the coefficient of variation was derived and defined as the coefficient of variation $C_{AD}$ of the thickness of the unstretched film. Next the thickness of the film having been biaxially stretched was measured with a pitch of [5 $\times$ transverse magnification factor $\times$ relaxation ratio] mm in the widthwise direction and this measurement was performed at 10 positions along the lengthwise direction with an interval of [10 $\times$ longitudinal magnification factor $\times$ relaxation ratio] m. From the total data thus obtained, the coefficient of variation was derived and defined as the coefficient of variation $C_{BO}$ of the thickness of the stretched film.

Then the ratio of $C_{BO}$ to $C_{AD}$, ($C_{BO}/C_{AD}$), was derived and defined as the thickness unevenness augmentation factor.

As the thickness measurement apparatus, Film Thickness Tester (KG601A) manufactured by Anritsu Corp. was used.

(2) Square grid stretching magnification factor (area magnification factor)

A 10-mm square grid pattern was printed over the whole surface of an unstretched film, and then the unstretched film was continuously stretched. The areas of the quadrangles after the biaxial stretching were obtained and the substantial stretching magnification factor (area magnification factor) of the film was measured for each of the quadrangular grids. From a wound-up film, an area of the total width times the length of 5 m in the lengthwise direction was sampled, and from the array matrix of the obtained substantial stretching magnification factor, the area magnification factor distribution was obtained. This measurement was performed at 10 positions in the lengthwise direction at an interval of 100 m. From the total area magnification factor data, the coefficient of variation was derived.

(3) Refractive index in thickness direction

First, the following five points were determined along the widthwise direction of a stretched film: the central point; the two points (edge points) 5 cm inwardly away respectively from the two edges; and the two points at the midpoints respectively between the central point and one of the edge points and between the central point and the other of the edge points. A 10 cm × 10 cm square sample centering at each of these five points was cut out in such a way that the sides of the square of the sample were parallel to either of the longitudinal and widthwise directions. The sample cutting out was performed at 40 positions in the lengthwise direction of the film at an interval of 100 m, and thus 5 × 40 = 200 pieces of specimens were obtained in total.

Each of the specimens was allowed to stand in an environment of a temperature of 20°C and a humidity of 65% for 2 hours or more, and then subjected to a measurement of the refractive index in the thickness direction with an Abbe refractometer (1T) manufactured by Atago Co., Ltd. in an environment of a temperature of 20°C and a humidity of 65%. In each of the specimens, the number of the measurement points was n = 3, and the average over the three points was taken as the datum.

From the data of the 200 points, the average refractive index, the maximum refractive index and the minimum refractive index were derived; then, on the basis of the following formula, the value involving the larger difference from the average refractive strength was defined as the variation rate of the refractive index.

```
Variation rate = (|maximum refractive index or minimum refractive index - average refractive index| ×

100)/average refractive index
```

(4) Stretching stress ($F_{CP}$) exerted on clip

A strain gauge was attached to the junction between the support 22 and the clip 23 shown in FIG. 4, and the force components (the bending stress exerted on the traveling direction and the tensile strength exerted on the direction perpendicular to the traveling direction) of the stretching stress exerted on the clip were measured. The stress signal was wirelessly transferred by using a microtelemeter NK7690D (manufactured by NEC Sanei Instruments, Ltd.), and the synthesis force $F_{CP}$ and the angle $\phi$ were computed on the basis of the computer analysis from traveling position of the clip being subjected to measurement.

(5) S-shaped curling phenomenon

A laminated film was prepared by dry laminating a biaxially stretched polyamide resin film and a sealant film (CP: unstretched polypropylene film manufactured by Tohcello Co., Ltd., RX-21, thickness: 40 $\mu$m) by using an urethane adhesive (Takerack A-525/A-52, two-part type, manufactured by Mitsui Chemical Polyurethane, Inc.) (the application amount of the adhesive: 3 g/m$^2$).

The obtained laminated film was slit to a width of 400 mm. While the slit film thus obtained was being folded in half so as to make a crease in the longitudinal direction, the both widthwise edges were continuously heat sealed, each in a width of 20 mm, at 180°C with a test sealer. Then, the thus folded and sealed film was heat sealed along the direction perpendicular to the both widthwise edges in a width of 10 mm at an interval of 150 mm successively along the longitudinal direction, to yield semi-finished bags of about 200 mm in width. Each of the semi-finished bags was cut in the longitudinal direction in such a way that the width of each of the sealed portions of the both widthwise edges is 10 mm, and then, cut in the direction perpendicular to the longitudinal direction at each of the boundaries of the sealed portions to yield 10 three-side sealed bags. These three-side sealed bags were heat treated in boiling water for 30 minutes, then allowed to stand for 24 hours in an atmosphere of 20°C and 65% RH. Then, these 10 three-side sealed bags were stacked, and a load of 9.8 N (1 kgf) was applied to the whole top surface of the stack of the bags. The bags were allowed to stand for 24 hours in this condition, and then the load was removed and the degree of the warping (S-shaped curling) of each of the bags was observed. Thus, the bags were evaluated on the basis of the following standards.
E(Excellent): All the 10 bags are free from warping.
G(Good): Some of the 10 bags are slightly warped.
A(Average): Some of the 10 bags are definitely warped.
P(Poor): All the 10 bags are remarkably warped.

(6) Adhesive strength of film surface layer and variation rate thereof

The adhesive strength of the film surface layer of the laminated polyamide resin film was evaluated by preparing the specimens with the following method.
First, a dry laminating adhesive (Takerack A-525/A-52, two-part type, manufactured by Mitsui Chemical Polyurethane, Inc.) was applied with a gravure roll to the surface of the laminated portion of the laminated polyamide resin film in such a way that the applied amount of the adhesive in dryness was 2.5 g/m$^2$, and then heat treated at 80°C. On the thus treated laminated polyamide resin film, an unstretched polypropylene film (RXC-21, 70 $\mu$m, manufactured by Tohcello Co., Ltd.) was dry laminated on a metal roll heated to 80°C by applying a nip pressure of 490 kPa. Then, the aging recommended for the adhesive used was performed to yield a laminated film.
By applying the sampling method of the specimens as in the measurement method of the "(3) Refractive index in thickness direction," 200 pieces of specimens were prepared.
For the measurement of the adhesive strength, specimens of 15 mm in width were sampled from the cut-out sample. In an atmosphere of 20°C and 65% RH, the polypropylene film and the laminated polyamide resin film at the edge of each of the specimens were peeled off, and then the adhesive strength of each of the specimens was measured with a tensile tester (AGS-100G, manufactured by Shimadzu Corp.) at a tensile speed of 300 mm/min, by pulling the polypropylene film while the polypropylene film was being bent under the condition that the angle of the polypropylene film relative to the laminated polyamide resin film was 180°. In each of the specimens, the number of the measurement points was n = 3, and the average over the three points was taken as the datum.
From the data of the 200 pieces of the specimens, the average adhesive strength, the maximum adhesive strength and the minimum adhesive strength were derived; then, on the basis of the following formula, the value involving the larger difference from the average adhesive strength was defined as the variation rate of the adhesive strength.

```
Variation rate = (|maximum adhesive strength or
minimum adhesive strength - average adhesive strength| ×
100)/average adhesive strength
```

(7) Gas-barrier property (Oxygen permeability and variation rate thereof)

The oxygen permeability of each of the specimens of the laminated polyamide resin film in an atmosphere of a temperature of 20°C and a relative humidity of 85% was measured as the oxygen gas-barrier property by using an oxygen barrier tester (OX-TRAN 2/20) manufactured by Mocon, Inc. The number of the measurement points was n = 3, and the average over the three points was taken as the datum.
By applying the sampling method of the specimens as in the measurement method of the "(3) Refractive index in thickness direction," 200 pieces of specimens were prepared.
From the data of these 200 pieces of the specimens, the average oxygen permeability, the maximum oxygen permeability and the minimum oxygen permeability were derived; then, on the basis of the following formula, the value involving the larger difference from the average oxygen permeability was defined as the variation rate of the oxygen permeability.

$$\text{Variation rate} = (|\text{maximum oxygen permeability or}$$
$$\text{minimum oxygen permeability} - \text{average oxygen permeability}|$$
$$\times 100)/\text{average oxygen permeability}$$

[Preparation of master chip]

A master chip was prepared by melt-mixing 6 parts by mass of silica (Silysia 310P, average particle size: 2.7 $\mu$m, manufactured by Fuji Silysia Chemical Ltd.) with 100 parts by mass of the material prepared by drying the nylon 6 resin (A1030-BRF, manufactured by Unitika Ltd.) having a relative viscosity of 3.0 measured in 96% concentrated sulfuric acid under the conditions of a temperature of 25°C and a concentration of 1.0 g/dl.

[Preparation of polyvinylidene chloride copolymer (PVDC) latex]

In a glass-lined pressure-tight reaction vessel, 85 parts by mass of water, 0.15 part by mass of sodium alkylsulfonate and 0.10 part by mass of sodium persulfate were placed and degassed, and then the temperature of the contents was maintained at 55°C. In another vessel, 97 parts by mass of vinylidene chloride, 2 parts by mass of methyl acrylate and 1 part by mass of acrylic acid were mixed after metering to prepare a monomer mixture. In the above-described reaction vessel, 10 parts by mass of the monomer mixture was fed, and the reaction of the mixture was allowed to proceed under stirring. After making sure, from the decrease of the pressure inside the reaction vessel, that the reaction proceeded almost completely, 10 parts by mass of a 15% by mass aqueous solution of sodium alkylsulfonate was pressed into the reaction vessel, and subsequently all the rest of the monomer mixture was continuously added by metering into the reaction vessel over 15 hours. To the latex thus obtained, the 15% by mass aqueous solution of sodium alkylsulfonate was added in such a way that the liquid surface tension at 20°C reached 42 mN/m.

The polymerization yield of this case was 99.9%. Therefore, the composition of the obtained vinylidene chloride copolymer latex (A) was found to be almost equal to the composition at the start of the reaction. The solid content concentration of the latex (A) was 51% by mass. The melting point of the solid content of the latex (A) was found to be 190°C by the DSC measurement of the crystal melting point.

A monomer mixture was prepared by altering the composition as compared to the composition of the above-described monomer mixture to the composition composed of 90 parts by mass of vinylidene chloride, 9 parts by mass of methyl acrylate and 1 part by mass of acrylic acid. Then, otherwise in the same manner as described above, a vinylidene chloride copolymer latex (B) was obtained. The solid content concentration of the latex was 51% by mass. The melting point of the solid content of the latex was found to be 140°C by the DSC measurement of the crystal melting point.

A mixed latex was obtained by mixing together the latex (A) and the latex (B) under stirring. In this case, the content of the vinylidene chloride copolymer of (A) was set at 35 parts by mass in relation to 100 parts by mass of the total content of the vinylidene chloride copolymers contained in the mixed latex.

(Other materials)

Nylon 6 (Ny6): A1030BRF (relative viscosity: 3.0) manufactured by Unitika Ltd.
MXD6: MX nylon 6907 (relative viscosity: 2.40) manufactured by Mitsubishi Gas Chemical Company, Inc.
Amorphous polyamide (amorphous Ny): Grivory XE3038 manufactured by EMS Chemie AG.
EVOH: Eval F101B (ethylene component: 32 mol%, degree of saponification: 99% or more) manufactured by Kuraray Co., Ltd.
Ethylene-butene copolymer: Toughmer A4085 manufactured by Mitsui Chemicals, Inc.

Example 1

Nylon 6 resin was melt-extruded from a T-die of 600 mm in width, cooled on a cooling roll for solidification in a sheet shape to form a 150-$\mu$m thick unstretched polyamide film, and successively the sheet thus obtained was subjected to a water absorption treatment in a heated water tank regulated in temperature at 50°C. Then, the film was fed to a simultaneous biaxial stretching tenter driven by linear motors, the both widthwise edges of the film were gripped with clips, and the film was subjected to a simultaneous biaxial stretching under the condition of 190°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the longitudinal stretching magnification factor trace free from the decrease of the longitudinal stretching magnification factor represented by the inter-clip linear distance. The pattern of the longitudinal stretching magnification factor trace thus established is shown by A in FIG. 1.

The film was further heat treated at 215°C in a tenter oven to be subjected to a relaxation treatment of 2% both longitudinally and transversely, and then cooled. Next, the both widthwise edges of the film were trimmed, and then the film was wound up with a winder. In this way, a product roll of a 15-$\mu$m thick simultaneously biaxially stretched polyamide film was obtained. The winding-up speed was set at 120 m/min.

The thickness unevenness augmentation factor in the widthwise direction was found to be 2.1 in Example 1. Specifically, the coefficient of variation of the thickness of the unstretched film was 1.0%, whereas the coefficient of variation of the thickness of the stretched film was 2.1%. The coefficient of variation of the area magnification factor was found to be less than 2% to indicate that the film was stretched uniformly. The variation rate of the refractive index in the direction of the film thickness was found to be 0.07%. Absolutely no decrease of the $F_{CP}$ shown in FIG. 4 was found.

In other words, a film stretched uniformly both in the widthwise direction and in the lengthwise direction was obtained. The film was practically usable as a product almost over the whole width thereof.

Example 2

Under the same conditions as in Example 1, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 3%. The thickness unevenness augmentation factor in the widthwise direction was found to be 3.5. Specifically, the coefficient of variation of the thickness of the unstretched film was 1.0%, whereas the coefficient of variation of the thickness of the stretched film was 3.5%. The coefficient of variation of the area magnification factor was found to be less than 4%, but the thickness unevenness was increased. The variation rate of the refractive index in the direction of the film thickness was found to be 0.29%. The $F_{CP}$ was temporarily in an equilibrium condition but underwent no decrease.

As a result, a film stretched almost uniformly and free from any practical problems was obtained. The film was found to be adoptable as a film product.

Example 3

Under the same conditions as in Example 1, adopted was the longitudinal stretching magnification factor trace in which the longitudinal stretching magnification factor represented by the inter-clip distance was decreased by 2%, as shown by B in FIG. 1.

The thickness unevenness augmentation factor in the widthwise direction was found to be 3.4. Specifically, the coefficient of variation of the thickness of the unstretched film was 1.0%, whereas the coefficient of variation of the thickness of the stretched film was 3.4%. The coefficient of variation of the area magnification factor was found to be less than 4%, but the thickness unevenness was increased. The variation rate of the refractive index in the direction of the film thickness was found to be 0.24%. The $F_{CP}$ was temporarily in an equilibrium condition but underwent no decrease.

As a result, a film stretched almost uniformly and free from any practical problems was obtained. The film was able to be adopted as a film product.

Example 4

Under the same conditions as in Example 1, an unstretched polyamide film was fed to a pantograph-type simultaneous biaxial stretching machine, the both widthwise edges of the film were gripped with clips, and the film was subjected to a simultaneous biaxial stretching with a longitudinal stretching magnification factor of 3.0 and with a transverse stretching magnification factor of 3.3. In this case, by regulating the separation between the guide rails, the distortions of the longitudinal stretching magnification factor trace were corrected, and thus adopted was the longitudinal stretching magnification factor trace free from the decrease of the longitudinal stretching magnification factor represented by the inter-clip linear distance. The pattern of this longitudinal stretching magnification factor trace is shown by A in FIG. 1.

The thickness unevenness augmentation factor in the widthwise direction was found to be 2.2. Specifically, the coefficient of variation of the thickness of the unstretched film was 1.0%, whereas the coefficient of variation of the thickness of the stretched film was 2.2%. The coefficient of variation of the area magnification factor was found to be less than 2% to indicate that the film was stretched uniformly. The variation rate of the refractive index in the direction of the film thickness was found to be 0.08%. Absolutely no decrease of $F_{CP}$ was found.

As described above, in Examples 1 to 4, films uniformly stretched both in the widthwise direction and in the lengthwise direction were obtained. These films were practically usable as products almost over the whole width thereof.

Comparative Example 1

Under the same conditions as in Example 1, adopted was a longitudinal stretching magnification factor trace having the pattern shown by B in FIG. 1 in which the longitudinal stretching magnification factor represented by the inter-clip distance was decreased by 5%.

The thickness unevenness augmentation factor in the widthwise direction was found to be 9.5. Specifically, the coefficient of variation of the thickness of the unstretched film was 1.0%, whereas the coefficient of variation of the thickness of the stretched film was 9.5%. The coefficient of variation of the area magnification factor was found to be more than 10%, and remarkable stretching unevenness was observed. The variation rate of the refractive index in the direction of the film thickness was found to be 1.2%. The $F_{CP}$ was temporarily decreased by 30%.

The prepared film was not able to be adopted as a film product.

Example 5

Dried Nylon 6 resin (A1030-BRF, manufactured by Unitika Ltd.) and the above-described master chip were blended in such a way that the mixing proportion of silica was 0.05% by mass to prepare a mixture. The mixture was placed in an extruder, melt-extruded from a T-die of 600 mm in width, and cooled on a cooling roll for solidification in a sheet shape to form a 150-$\mu$m thick unstretched polyamide film. Successively the film thus obtained was subjected to a water absorption treatment by passing the film through a heated water tank regulated in temperature at 50°C. Then, the film was fed to a simultaneous biaxial stretching tenter driven by linear motors, the both widthwise edges of the film were gripped with clips, and the film was subjected to a simultaneous biaxial stretching under the condition of 190°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1.

The film was further heat treated at 215°C in a tenter oven to be subjected to a relaxation treatment of 2% both longitudinally and transversely, and then cooled. Next, the both widthwise edges of the film were trimmed, and then the film was wound up with a winder. In this way, a product roll of a 15-$\mu$m thick simultaneously biaxially stretched polyamide film was obtained. The winding-up speed was set at 120 m/min.

The measurement results of the individual properties of the obtained film are shown in Table 1. As can be seen from Table 1, the thickness unevenness augmentation factor was found to be 2.1. Specifically, the coefficient of variation of the thickness of the unstretched film was 1.0%, whereas the coefficient of variation of the thickness of the stretched film was 2.1%. The average of the refractive index in the thickness direction was 1.504, and the variation rate of the refractive index in the thickness direction was found to be 0.07% to indicate that the film was stretched uniformly. During the stretching, absolutely no decrease of the $F_{CP}$ shown in FIG. 4 was found. In other words, a film stretched uniformly both in the widthwise direction and in the lengthwise direction was obtained. Consequently, the film was practically usable as a product almost over the whole width thereof.

[Table 1]

| | Thickness (μm) | Stretching temperature (°C) | Decrease rate in longitudinal stretching magnification factor trace (%) | Thickness unevenness augmentation factor | Average refractive index | Variation rate (%) | Decrease of $F_{CP}$ | S-shaped curling |
|---|---|---|---|---|---|---|---|---|
| Example 5 | 15 | 190 | 0 | 2.1 | 1.504 | 0.07 | Not found | E |
| Example 6 | 15 | 190 | 2 | 3.4 | 1.503 | 0.24 | Not found | G |
| Example 7 | 15 | 190 | 1 | 2.9 | 1.504 | 0.18 | Not found | E |
| Example 8 | 15 | 190 | 0 | 2.2 | 1.504 | 0.08 | Not found | E |
| Example 9 | 25 | 200 | 0 | 2.3 | 1.505 | 0.07 | Not found | E |
| Example 10 | 15 | 185 | 0 | 2.4 | 1.517 | 0.09 | Not found | E |
| Comparative Example 2 | 15 | 190 | 5 | 9.5 | 1.504 | 1.2 | Found | A |
| Comparative Example 3 | 25 | 200 | 5 | 9.8 | 1.504 | 1.4 | Found | A |
| Comparative Example 4 | 15 | 185 | 5 | 10.1 | 1.519 | 2.9 | Found | P |

Example 6

As compared to Example 5, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 2%. Otherwise in the same manner as in Example 5, a product roll of a simultaneously biaxially stretched polyamide film was obtained.

The measurement results of the individual properties of the obtained film are shown in Table 1. As can be seen from Table 1, the thickness unevenness augmentation factor was found to be 3.4 (the coefficient of variation of the thickness of the unstretched film was 1.0%, whereas the coefficient of variation of the thickness of the stretched film was 3.4%), to indicate that the thickness unevenness was increased as compared to Example 5. The average of the refractive index in the thickness direction was 1.503, and the variation rate of the refractive index in the thickness direction was found to be 0.24% to indicate that the film was stretched uniformly. The $F_{CP}$ shown in FIG. 4 was temporarily in an equilibrium condition but underwent no decrease. In other words, a film stretched almost uniformly and practically free from any problems was obtained. Consequently, the film was able to be adopted as a film product.

Example 7

As compared to Example 5, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 1%. Otherwise in the same manner as in Example 5, a product roll of a simultaneously biaxially stretched polyamide film was obtained.

The measurement results of the individual properties of the obtained film are shown in Table 1. As can be seen from Table 1, the thickness unevenness augmentation factor was found to be 2.9 (the coefficient of variation of the thickness of the unstretched film was 1.0%, whereas the coefficient of variation of the thickness of the stretched film was 2.9%), to indicate that the thickness unevenness was somewhat increased as compared to Example 5. The average of the refractive index in the thickness direction was 1.504, and the variation rate of the refractive index in the thickness direction was found to be 0.18%. No decrease of $F_{CP}$ was found. In other words, a film stretched almost uniformly and practically free from any problems was obtained. Consequently, the film was able to be adopted as a film product.

Example 8

An unstretched polyamide film prepared under the same conditions as in Example 5 was fed to a pantograph-type simultaneous biaxial stretching machine, the both widthwise edges of the film were gripped with clips, and the film was subjected to a simultaneous biaxial stretching with a longitudinal stretching magnification factor of 3.0 and with a transverse stretching magnification factor of 3.3. In this case, by regulating the separation between the guide rails, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1. Otherwise in the same manner as in Example 5, a product roll of a simultaneously biaxially stretched polyamide film was obtained.

The measurement results of the individual properties of the obtained film are shown in Table 1. As can be seen from Table 1, the thickness unevenness augmentation factor was found to be 2.2 (the coefficient of variation of the thickness of the unstretched film was 1.0%, whereas the coefficient of variation of the thickness of the stretched film was 2.2%). The average of the refractive index in the thickness direction was 1.504, and the variation rate of the refractive index in the thickness direction was found to be 0.08% to indicate that the film was stretched uniformly. Absolutely no decrease of $F_{CP}$ was found. In other words, a film stretched uniformly both in the widthwise direction and in the lengthwise direction was obtained, and the film was practically usable as a product almost over the whole width thereof.

Example 9

Dried Nylon 6 resin (A1030-BRF, manufactured by Unitika Ltd.) and the above-described master chip were blended in such a way that the mixing proportion of silica was 0.05% by mass to prepare a mixture. The mixture was placed in an extruder, melt-extruded from a T-die of 600 mm in width, and cooled on a cooling roll for solidification in a sheet shape to form a 250-$\mu$m thick unstretched polyamide film. Successively the film thus obtained was subjected to a water absorption treatment by passing the film through a heated water tank regulated in temperature at 50°C. Then, the film was fed to a pantograph-type simultaneous biaxial stretching machine, the both widthwise edges of the film were gripped with clips, and the film was subjected to a simultaneous biaxial stretching under the condition of 200°C with a longitudinal stretching magnification factor of 3.0 and a transverse stretching magnification factor of 3.3. In this case, by regulating the separation between the guide rails, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1.

The film was further heat treated at 215°C in a tenter oven to be subjected to a relaxation treatment of 2% both longitudinally and transversely, and then cooled. Next, the both widthwise edges of the film were trimmed, and then the film was wound up with a winder. In this way, a product roll of a 25-μm thick simultaneously biaxially stretched polyamide film was obtained. The winding-up speed was set at 120 m/min.

The measurement results of the individual properties of the obtained film are shown in Table 1. As can be seen from Table 1, the thickness unevenness augmentation factor was found to be 2.3 (the coefficient of variation of the thickness of the unstretched film was 1.0%, whereas the coefficient of variation of the thickness of the stretched film was 2.3%). The average of the refractive index in the thickness direction was 1.505, and the variation rate of the refractive index in the thickness direction was found to be 0.07% to indicate that the film was stretched uniformly. Absolutely no decrease of $F_{CP}$ was found. In other words, a film stretched uniformly both in the widthwise direction and in the lengthwise direction was obtained. Consequently the film was practically usable as a product almost over the whole width thereof.

Example 10

Dried Nylon 6 resin (A1030-BRF, manufactured by Unitika Ltd.) and MXD6 (trade name: MX nylon S6907, relative viscosity: 2.40, manufactured by Mitsubishi Gas Chemical Company, Inc.) were mixed together in a ratio of 80:20 (mass ratio) to prepare a polyamide composition. The polyamide composition and the above-described master chip were blended in such a way that the mixing proportion of silica was 0.05% by mass to prepare a mixture. The mixture was placed in an extruder, melt-extruded from a T-die of 600 mm in width, and cooled on a cooling roll for solidification in a sheet shape to form a 150-μm thick unstretched polyamide film. Successively the film thus obtained was subjected to a water absorption treatment by passing the film through a heated water tank regulated in temperature at 60°C. Then, the film was fed to a pantograph-type simultaneous biaxial stretching machine, the both widthwise edges of the film were gripped with clips, and the film was subjected to a simultaneous biaxial stretching under the conditions of a stretching temperature of 185°C, a longitudinal stretching magnification factor of 3.0 and a transverse stretching magnification factor of 3.3. In this case, by regulating the separation between the guide rails, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1.

The film was further heat treated at 205°C for 4 seconds in a tenter oven to be subjected to a relaxation treatment of 5% both longitudinally and transversely, and then cooled. Next, the both widthwise edges of the film were trimmed, and then the film was wound up with a winder. In this way, a product roll of a 15-μm thick simultaneously biaxially stretched polyamide film was obtained. The winding-up speed was set at 120 m/min.

The measurement results of the individual properties of the obtained film are shown in Table 1. As can be seen from Table 1, the thickness unevenness augmentation factor was found to be 2.4 (the coefficient of variation of the thickness of the unstretched film was 1.0%, whereas the coefficient of variation of the thickness of the stretched film was 2.4%). The average of the refractive index in the thickness direction was 1.517, and the variation rate of the refractive index in the thickness direction was found to be 0.09% to indicate that the film was stretched uniformly. Absolutely no decrease of $F_{CP}$ was found. In other words, a film stretched uniformly both in the widthwise direction and in the lengthwise direction was obtained. Consequently the film was practically usable as a product almost over the whole width thereof.

Comparative Example 2

As compared to Example 5, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 5%. Otherwise in the same manner as in Example 5, a product roll of a simultaneously biaxially stretched polyamide film was obtained.

The measurement results of the individual properties of the obtained film are shown in Table 1. As can be seen from Table 1, the thickness unevenness augmentation factor was found to be 9.5 (the coefficient of variation of the thickness of the unstretched film was 1.0%, whereas the coefficient of variation of the thickness of the stretched film was 9.5%). The average of the refractive index in the thickness direction was 1.504, the variation rate of the refractive index in the thickness direction was found to be 1.2%, and remarkable stretching unevenness was observed. The $F_{CP}$ shown in FIG. 4 was temporarily decreased by 30%. As can be seen from Table 1, the prepared film was not able to be adopted as a film product.

Comparative Example 3

As compared to Example 9, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 5%. Otherwise in the same manner as in Example 9, a product roll of a simultaneously biaxially stretched polyamide film was obtained.

The measurement results of the individual properties of the obtained film are shown in Table 1. As can be seen from Table 1, the thickness unevenness augmentation factor was found to be 9.8 (the coefficient of variation of the thickness of the unstretched film was 1.0%, whereas the coefficient of variation of the thickness of the stretched film was 9.8%). The average of the refractive index in the thickness direction was 1.504, the variation rate of the refractive index in the thickness direction was found to be 1.4%, and remarkable stretching unevenness was observed. The $F_{CP}$ was temporarily decreased by 30%. As can be seen from Table 1, the prepared film was not able to be adopted as a film product.

Comparative Example 4

As compared to Example 10, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 5%. Otherwise in the same manner as in Example 10, a product roll of a simultaneously biaxially stretched polyamide film was obtained.

The measurement results of the individual properties of the obtained film are shown in Table 1. As can be seen from Table 1, the thickness unevenness augmentation factor was found to be 10.1 (the coefficient of variation of the thickness of the unstretched film was 1.0%, whereas the coefficient of variation of the thickness of the stretched film was 10.1%). The average of the refractive index in the thickness direction was 1.519, the variation rate of the refractive index in the thickness direction was found to be 2.9%, and remarkable stretching unevenness was observed. The $F_{CP}$ was temporarily decreased by 30%. As can be seen from Table 1, the prepared film was not able to be adopted as a film product.

Example 11

Dried Nylon 6 resin (A1030-BRF, relative viscosity: 3.0, manufactured by Unitika Ltd.) and the above-described master chip were blended in such a way that the mixing proportion of silica was 0.05% by mass to prepare a mixture. The mixture was placed in an extruder, melt-extruded from a T-die of 600 mm in width, and cooled on a cooling roll for solidification in a sheet shape to form a 150-$\mu$m thick unstretched polyamide film. Successively the film thus obtained was subjected to a water absorption treatment by passing the film through a heated water tank regulated in temperature at 50°C.

Next, the above-described polyvinylidene chloride copolymer latex was applied by an air knife coating method to the untreated surface of the unstretched polyamide film, and was subjected to a drying treatment for 30 seconds with an infrared irradiator set at a temperature of 110°C to evaporate the water in the latex for drying the latex. Thus, an unstretched laminated film was obtained.

Next, the unstretched laminated film was fed to a simultaneous biaxial stretching tenter driven by linear motors, the both widthwise edges of the film were gripped with clips, and the film was subjected to a simultaneous biaxial stretching under the condition of 190°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the condition free from the decrease in the longitudinal stretching magnification factor trace represented by the inter-clip distance, as shown by A in FIG. 1.

The film was further heat treated at 215°C for 5 seconds in a tenter oven to be subjected to a relaxation treatment of 2% both longitudinally and transversely, and then cooled. Next, the both widthwise edges of the film were trimmed, and then the film was wound up with a winder. In this way, obtained was a product roll of a simultaneously biaxially stretched laminated polyamide resin film of 15 $\mu$m in the thickness of the polyamide film of the substrate layer and 1.2 $\mu$m in the thickness of the laminated portion. The winding-up speed was set at 120 m/min.

The measurement results of the individual properties of the obtained film are shown in Table 2. As can be seen from Table 2, the thickness unevenness augmentation factor was found to be 2.1. Specifically, the coefficient of variation of the thickness of the unstretched film was 1.0%, whereas the coefficient of variation of the thickness of the stretched film was 2.1%. The average of the refractive index in the thickness direction was 1.5035, and the variation rate of the refractive index in the thickness direction was found to be 0.1% to indicate that the film was stretched uniformly. Absolutely no decrease of the $F_{CP}$ shown in FIG. 4 was found.

In other words, a film stretched uniformly both in the widthwise direction and in the lengthwise direction was obtained. The film was practically usable as a product almost over the whole width thereof.

[Table 2]

| | Thickness (μm) | Stretching temperature (°C) | Decrease rate in longitudinal stretching magnification factor trace (%) | Thickness unevenness augmenttation factor | Decrease of $F_{CP}$ | Laminated resin | Laminate adhesive strength (N/cm) | Variation rate (%) | Average refracttive index | Variation rate (%) | Oxygen permeability (ml/m²·d·MPa) | Variation rate (%) | S-shaped curling |
|---|---|---|---|---|---|---|---|---|---|---|---|---|---|
| Example 11 | 16.2 | 190 | 0 | 2.1 | Not found | PVDC based | 1.92 | 3.7 | 1.5035 | 0.1 | 68 | 4.4 | E |
| Example 12 | 16.2 | 190 | 2 | 3.4 | Not found | PVDC based | 1.94 | 9.5 | 1.5033 | 0.5 | 69 | 11.6 | G |
| Example 13 | 16.2 | 190 | 1 | 2.9 | Not found | PVDC based | 1.96 | 7.3 | 1.5042 | 0.3 | 68 | 10.3 | E |
| Example 14 | 16.2 | 190 | 0 | 2.2 | Not found | PVDC based | 1.94 | 4.7 | 1.5038 | 0.2 | 69 | 7.2 | E |
| Example 15 | 26.2 | 200 | 0 | 2.3 | Not found | PVDC based | 1.96 | 4.3 | 1.5045 | 0.2 | 62 | 4.8 | E |
| Example 16 | 16.2 | 185 | 0 | 2.4 | Not found | PVDC based | 1.91 | 5.8 | 1.5170 | 0.2 | 67 | 4.5 | E |
| Example 17 | 15.3 | 190 | 0 | 2.1 | Not found | EMA based | 2.95 | 4.7 | 1.5036 | 0.1 | 311 | 6.4 | E |
| Example 18 | 15.1 | 190 | 0 | 2.1 | Not found | Urethane based | 3.68 | 4.8 | 1.5036 | 0.1 | - | - | E |
| Comparative Example 5 | 16.2 | 190 | 5 | 9.5 | Found | PVDC based | 1.96 | 11.7 | 1.5037 | 1.2 | 68 | 17.6 | A |
| Comparative Example 6 | 26.2 | 200 | 5 | 9.8 | Found | PVDC based | 1.96 | 11.7 | 1.5042 | 1.4 | 62 | 19.4 | A |
| Comparative Example 7 | 16.2 | 185 | 5 | 10.1 | Found | PVDC based | 1.94 | 12.5 | 1.5191 | 2.9 | 68 | 19.1 | P |

Example 12

As compared to Example 11, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 2%. Otherwise in the same manner as in Example 11, a laminated polyamide resin film was obtained.

The measurement results of the individual properties of the obtained film are shown in Table 2. As can be seen from Table 2, the thickness unevenness augmentation factor was found to be 3.4 (the coefficient of variation of the thickness of the unstretched film was 1.0%, whereas the coefficient of variation of the thickness of the stretched film was 3.4%) to indicate that the thickness unevenness was increased as compared to Example 11. The average of the refractive index in the thickness direction was 1.5033, and the variation rate of the refractive index in the thickness direction was found to be 0.5%. The $F_{CP}$ shown in FIG. 4 was temporarily in an equilibrium condition but underwent no decrease. In other words, a biaxially stretched laminated film that was stretched almost uniformly and practically free from any problems was obtained. Consequently, the film was able to be adopted as a film product.

Example 13

As compared to Example 11, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 1%. Otherwise in the same manner as in Example 11, a laminated polyamide resin film was obtained.

The measurement results of the individual properties of the obtained film are shown in Table 2. As can be seen from Table 2, the thickness unevenness augmentation factor was found to be 2.9 (the coefficient of variation of the thickness of the unstretched film was 1.0%, whereas the coefficient of variation of the thickness of the stretched film was 2.9%) to indicate that the thickness unevenness was somewhat increased as compared to Example 11. The average of the refractive index in the thickness direction was 1.5042, and the variation rate of the refractive index in the thickness direction was found to be 0.3%. No decrease of the $F_{CP}$ shown in FIG. 4 was found. In other words, a film stretched almost uniformly and practically free from any problems was obtained. Consequently, the film was able to be adopted as a film product.

Example 14

As compared to Example 11, an unstretched laminated film was fed to a pantograph-type simultaneous biaxial stretching machine, the both widthwise edges of the film were gripped with clips, and the film was subjected to a simultaneous biaxial stretching. Otherwise the conditions were the same as in Example 11. In this case, however, by regulating the mutual separation between the guide rails, for guiding the traveling of the pantograph, disposed as a rail pair in the widthwise direction of the film, the distortions of the longitudinal stretching magnification factor trace were corrected, and thus adopted was the condition free from the decrease in the longitudinal stretching magnification factor trace represented by the inter-clip distance, as shown by A in FIG. 1.

The thickness evenness augmentation factor was found to be 2.2 (the coefficient of variation of the thickness of the unstretched film was 1.0%, whereas the coefficient of variation of the thickness of the stretched film was 2.2%). The average of the refractive index in the thickness direction was 1.5038, and the variation rate of the refractive index in the thickness direction was found to be 0.2% to indicate that the film was stretched uniformly. No decrease of the $F_{CP}$ shown in FIG. 4 was found.

The measurement results of the individual properties of the obtained film are shown in Table 2. As can be seen from Table 2, a film stretched uniformly both in the widthwise direction and in the lengthwise direction was obtained, and the film was practically usable as a product almost over the whole width thereof.

Example 15

Dried Nylon 6 resin (A1030-BRF, manufactured by Unitika Ltd.) and the above-described master chip were blended in such a way that the mixing proportion of silica was 0.05% by mass to prepare a mixture. The mixture was placed in an extruder, melt-extruded from a T-die of 600 mm in width, and cooled on a cooling roll for solidification in a sheet shape to form a 250-$\mu$m thick unstretched polyamide film. Successively the film thus obtained was subjected to a water absorption treatment in a heated water tank regulated in temperature at 50°C.

Next, the above-described vinylidene chloride copolymer latex was applied by an air knife coating method to the untreated surface of the unstretched film, and was subjected to a drying treatment for 30 seconds with an infrared irradiator set at a temperature of 110°C to evaporate the water in the latex for drying the latex.

Next, the film was fed to a pantograph-type simultaneous biaxial stretching machine, the both widthwise edges were gripped with clips, and the film was subjected to a simultaneous biaxial stretching under the condition of 200°C with a longitudinal stretching magnification factor of 3.0 and a transverse stretching magnification factor of 3.3. In this case, by regulating the mutual separation between a pair of guide rails, the distortions of the longitudinal stretching magnification factor trace were corrected, and thus adopted was the condition free from the decrease in the longitudinal stretching magnification factor trace represented by the inter-clip distance, as shown by A in FIG. 1.

The film was further heat treated at 215°C for 5 seconds in a tenter oven to be subjected to a relaxation treatment of 2% both longitudinally and transversely, and then cooled. Next, the both widthwise edges of the film were trimmed, and then the film was wound up with a winder. In this way, obtained was a product roll of a simultaneously biaxially stretched polyamide film of 25 $\mu$m in the thickness of the polyamide film of the substrate layer and 1.2 $\mu$m in the thickness of the laminated portion. The winding-up speed was set at 120 m/min.

The measurement results of the individual properties of the obtained film are shown in Table 2. As can be seen from Table 2, the thickness unevenness augmentation factor in the widthwise direction was found to be 2.3. Specifically, the coefficient of variation of the thickness of the unstretched film was 1.0%, whereas the coefficient of variation of the thickness of the stretched film was 2.3%. The average of the refractive index in the thickness direction was 1.5045, and the variation rate of the refractive index in the thickness direction was found to be 0.2% to indicate that the film was stretched uniformly. Absolutely no decrease of the $F_{CP}$ shown in FIG. 4 was found.

In other words, a film stretched uniformly both in the widthwise direction and in the lengthwise direction was obtained. The film was practically usable as a product almost over the whole width thereof.

Example 16

Dried Nylon 6 resin (A1030-BRF, manufactured by Unitika Ltd.) and MXD6 (trade name: MX nylon S6907, relative viscosity: 2.40, manufactured by Mitsubishi Gas Chemical Company, Inc.) were mixed together in a ratio of 80:20 (mass ratio) to prepare a polyamide resin composition. The polyamide resin composition and the above-described master chip were blended in such a way that the mixing proportion of silica was 0.05% by mass to prepare a mixture. The mixture was placed in an extruder, melt-extruded from a T-die of 600 mm in width, and cooled on a cooling roll for solidification in a sheet shape to form a 150-$\mu$m thick unstretched polyamide film. Successively the film thus obtained was subjected to a water absorption treatment in a heated water tank regulated in temperature at 60°C.

Next, the above-described vinylidene chloride copolymer latex was applied by an air knife coating method to the untreated surface of the unstretched film, and was subjected to a drying treatment for 30 seconds with an infrared irradiator set at a temperature of 110°C to evaporate the water in the latex for drying the latex.

Next, the film was fed to a pantograph-type simultaneous biaxial stretching machine, the both widthwise edges were gripped with clips, and the film was subjected to a simultaneous biaxial stretching at a stretching temperature of 185°C with a longitudinal stretching magnification factor of 3.0 and a transverse stretching magnification factor of 3.3. In this case, by regulating the mutual separation between the guide rails, the distortions of the longitudinal stretching magnification factor trace were corrected, and thus adopted was the condition free from the decrease in the longitudinal stretching magnification factor trace represented by the inter-clip distance, as shown by A in FIG. 1.

The film was further heat treated at 205°C for 5 seconds in a tenter oven to be subjected to a relaxation treatment of 5% both longitudinally and transversely, and then cooled. Next, the both widthwise edges of the film were trimmed, and then the film was wound up with a winder. In this way, obtained was a product roll of a simultaneously biaxially stretched polyamide film of 15 $\mu$m in the thickness of the polyamide film of the substrate layer and 1.2 $\mu$m in the thickness of the laminated portion. The winding-up speed was set at 120 m/min.

The measurement results of the individual properties of the obtained film are shown in Table 2. As can be seen from Table 2, the thickness unevenness augmentation factor in the widthwise direction was found to be 2.4. Specifically, the coefficient of variation of the thickness of the unstretched film was 1.0%, whereas the coefficient of variation of the thickness of the stretched film was 2.4%. The average of the refractive index in the thickness direction was 1.5170, and the variation rate of the refractive index in the thickness direction was found to be 0.2% to indicate that the film was stretched uniformly.. Absolutely no decrease of the $F_{CP}$ shown in FIG. 4 was found.

In other words, a film stretched uniformly both in the widthwise direction and in the lengthwise direction was obtained. The film was practically usable as a product almost over the whole width thereof.

Example 17

Polyvinyl alcohol (PVA) (Poval 105 (degree of saponification of polyvinyl: 98 to 99%, average degree of polymerization: about 500), manufactured by Kuraray Co., Ltd.) was dissolved in hot water, and then cooled down to room temperature to prepare a PVA aqueous solution having a solid content concentration of 15% by mass. Ethylene-maleic acid copolymer (EMA) (weight average molecular weight: 60000, maleic acid unit: 45 to 50 mol%) and sodium hydroxide were used, dissolved in hot water, and then cooled down to room temperature; in this way, 10 mol% of the carboxyl group was neutralized by the sodium hydroxide to prepare an EMA aqueous solution having a solid content concentration of 15% by mass.

Next, the PVA aqueous solution and the EMA aqueous solution were mixed together in such a way that the mass ratio (solid content) between PVA and EMA was 30/70 to prepare a mixed aqueous solution of olefin-carboxylic acid copolymer having a solid content concentration of 10% by mass.

Next, the above-described mixed solution of olefin-carboxylic acid copolymer was applied by an air knife coating method to the untreated surface of the unstretched polyamide film obtained in the same manner as in Example 11, and was subjected to a drying treatment for 30 seconds with an infrared irradiator set at a temperature of 110°C to evaporate the water in the mixed solution for drying the solution. Thus, an unstretched laminated film was obtained.

Next, the unstretched laminated film was fed to a simultaneous biaxial stretching tenter driven by linear motors, the both widthwise edges of the film were gripped with clips, and the film was subjected to a simultaneous biaxial stretching under the condition of 190°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the condition free from the decrease in the longitudinal stretching magnification factor trace represented by the inter-clip distance, as shown by A in FIG. 1.

The film was further heat treated at 215°C for 5 seconds in a tenter oven to be subjected to a relaxation treatment of 2% both longitudinally and transversely, and then cooled. Next, the both widthwise edges of the film were trimmed, and then the film was wound up with a winder. In this way, obtained was a product roll of a simultaneously biaxially stretched laminated polyamide resin film of 15 $\mu$m in the thickness of the polyamide film of the substrate layer and 0.3 $\mu$m in the thickness of the laminated portion. The winding-up speed was set at 120 m/min.

The measurement results of the individual properties of the obtained film are shown in Table 2. As can be seen from Table 2, the thickness unevenness augmentation factor was found to be 2.1. Specifically, the coefficient of variation of the thickness of the unstretched film was 1.0%, whereas the coefficient of variation of the thickness of the stretched film was 2.1%. The average of the refractive index in the thickness direction was 1.5036, and the variation rate of the refractive index in the thickness direction was found to be 0.1% to indicate that the film was stretched uniformly. Absolutely no decrease of the $F_{CP}$ shown in FIG. 4 was found. It is to be noted that because an EMA resin was laminated, the laminate adhesive strength was improved but the gas-barrier property was degraded as compared to the PVDC resin-laminated films of Examples 11 to 16. However, the coefficients of variation of these performances were equivalent to those in Examples 11 to 16 to indicate that the film obtained was excellent in the performance uniformity.

In other words, a film stretched uniformly both in the widthwise direction and in the lengthwise direction was obtained. The film was practically usable as a product almost over the whole width thereof.

Example 18

Takerack WS-5100, a urethane emulsion manufactured by Mitsui Chemicals, Inc., was diluted with water to prepare an easy-adhesion aqueous solution adjusted in concentration to 10% by mass.

Next, the above-described easy-adhesion aqueous solution was applied by an air knife coating method to the untreated surface of the unstretched polyamide film obtained in the same manner as in Example 11, and was subjected to a drying treatment for 30 seconds with an infrared irradiator set at a temperature of 110°C to evaporate the water in the mixed solution for drying the solution. Thus, an unstretched laminated film was obtained.

Next, the unstretched laminated film was fed to a simultaneous biaxial stretching tenter driven by linear motors, the both widthwise edges of the film were gripped with clips, and the film was subjected to a simultaneous biaxial stretching under the condition of 190°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the condition free from the decrease in the longitudinal stretching magnification factor trace represented by the inter-clip distance, as shown by A in FIG. 1.

The film was further heat treated at 215°C for 5 seconds in a tenter oven to be subjected to a relaxation treatment of 2% both longitudinally and transversely, and then cooled. Next, the both widthwise edges of the film were trimmed, and then the film was wound up with a winder. In this way, obtained was a product roll of a simultaneously biaxially stretched laminated polyamide resin film of 15 $\mu$m in the thickness of the polyamide film of the substrate layer and 0.1 $\mu$m in the thickness of the laminated portion. The winding-up speed was set at 120 m/min.

The measurement results of the individual properties of the obtained film are shown in Table 2. As can be seen from Table 2, the thickness unevenness augmentation factor was found to be 2.1. Specifically, the coefficient of variation of the thickness of the unstretched film was 1.0%, whereas the coefficient of variation of the thickness of the stretched film was 2.1%. The average of the refractive index in the thickness direction was 1.5036, and the variation rate of the refractive index in the thickness direction was found to be 0.1% to indicate that the film was stretched uniformly. Absolutely no decrease of the $F_{CP}$ shown in FIG. 4 was found. It is to be noted that because a urethane resin was laminated, the laminate adhesive strength was improved as compared to the PVDC resin-laminated films of Examples 11 to 16, and additionally the coefficient of variation of the laminate adhesive strength was equivalent to those in Examples 11 to 16 to indicate that the film obtained was excellent in the performance uniformity. The urethane resin is not a resin exhibiting gas-barrier property, and hence no evaluation of the oxygen permeability was performed.

In other words, a film stretched uniformly both in the widthwise direction and in the lengthwise direction was obtained. The film was practically usable as a product almost over the whole width thereof.

Comparative Example 5

As compared to Example 11, adopted was the condition in which a decrease occurred in the longitudinal stretching magnification factor trace represented by the inter-clip distance, as shown by B in FIG. 1. The decrease rate of the longitudinal stretching magnification factor was set at 5%. Otherwise under the same conditions as in Example 11, a laminated polyamide resin film was obtained.

The measurement results of the individual properties of the obtained film are shown in Table 2. As can be seen from Table 2, the thickness unevenness augmentation factor was found to be 9.5. Specifically, the coefficient of variation of the thickness of the unstretched film was 1.0%, whereas the coefficient of variation of the thickness of the stretched film was 9.5%. The average of the refractive index in the thickness direction was 1.5037, the variation rate of the refractive index in the thickness direction was found to be 1.2%, and remarkable stretching unevenness was observed. The $F_{CP}$ shown in FIG. 4 was temporarily decreased by 30%. Consequently, the prepared film was not able to be adopted as a film product.

Comparative Example 6

As compared to Example 15, adopted was the longitudinal stretching magnification factor trace in which the longitudinal magnification factor represented by the inter-clip distance was decreased, as shown by B in FIG. 1. Additionally, the decrease rate of the longitudinal stretching magnification factor was set at 5%. Otherwise in the same manner as in Example 15, a laminated polyamide resin film was obtained.

The measurement results of the individual properties of the obtained film are shown in Table 2. As can be seen from Table 2, the thickness unevenness augmentation factor in the widthwise direction was found to be 9.8 (the coefficient of variation of the thickness of the unstretched film was 1.0%, whereas the coefficient of variation of the thickness of the stretched film was 9.8%). The average of the refractive index in the thickness direction was 1.5042, the variation rate of the refractive index in the thickness direction was found to be 1.4%, and remarkable stretching unevenness was observed. The $F_{CP}$ shown in FIG. 4 was temporarily decreased by 30%. Consequently, the prepared film was not able to be adopted as a film product.

Comparative Example 7

As compared to Example 16, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 5%. Otherwise in the same manner as in Example 16, a laminated polyamide resin film was obtained.

The measurement results of the individual properties of the obtained film are shown in Table 2. As can be seen from Table 2, the thickness unevenness augmentation factor in the widthwise direction was found to be 10.1 (the coefficient of variation of the thickness of the unstretched film was 1.0%, whereas the coefficient of variation of the thickness of the stretched film was 10.1%). The average of the refractive index in the thickness direction was 1.5191, the variation rate of the refractive index in the thickness direction was found to be 2.9%, and remarkable stretching unevenness was observed. The $F_{CP}$ shown in FIG. 4 was temporarily decreased by 30%. Consequently, the prepared film was not able to be adopted as a film product.

Example 19

By using a five-layer coextrusion T-die, MXD6 constituting the resin layer (X) was melt-extruded at 280°C from a first extruder, a mixture prepared by blending nylon 6 resin (A1030-BRF, manufactured by Unitika Ltd.) and the above-described master chip in such a way that the mixing proportion of silica was 0.05% by mass, constituting the resin layer (Z) was melt-extruded at 270°C from a second extruder, and a resin prepared by mixing 30 parts by mass of MXD6 and 70 parts by mass of XE3038, constituting the resin layer (Y) was melt-extruded at 280°C from a third extruder. Thus, a laminated unstretched sheet that was laminated in the order of Z/Y/X/Y/Z was extruded from the die, and brought into close contact on a cooling drum regulated at a surface temperature of 20°C to be rapidly cooled, to prepare a 150-$\mu$m thick unstretched laminated sheet. Successively, the prepared sheet was subjected to a water absorption treatment by passing the sheet through a heated water tank regulated in temperature at 50°C. Next, this film was fed to a simultaneous biaxial stretching tenter driven by linear motors, the both widthwise edges of the film were gripped with clips, and the film was subjected to a simultaneous biaxial stretching under the condition of 190°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1.

The film was further heat treated at 210°C for 4 seconds with a relaxation rate of 5% in the transverse direction, and slowly cooled down to room temperature, to prepare a product roll of a laminated stretched film having thickness values of Z/Y/X/Y/Z = 4.5/0.5/5.0/0.5/4.5 $\mu$m. The winding-up speed was set at 120 m/min.

The measurement results of the individual properties of the obtained film are shown in Table 3. As can be seen from Table 3, the thickness unevenness augmentation factor in the widthwise direction was found to be 2.2. Specifically, the coefficient of variation of the thickness of the unstretched film was 1.0%, whereas the coefficient of variation of the thickness of the stretched film was 2.2%. The average of the refractive index in the thickness direction was 1.497, and the variation rate of the refractive index in the thickness direction was found to be 0.04% to indicate that the film was stretched uniformly. During stretching, absolutely no decrease of the $F_{CP}$ shown in FIG. 4 was found. In other words, a film stretched uniformly both in the widthwise direction and in the lengthwise direction was obtained. Consequently, the film was practically usable as a product almost over the whole width thereof.

[Table 3]

| | Resin layer (X) | Resin layer (Y) | Resin layer (Z) | Z/Y/X/Y/Z (μm) | Thickness (μm) | Stretching temperature (°C) | Decrease rate of the longitudinal stretching magnification factor (%) | Thickness unevenness augmentation factor | Average refracttive index | variation rate of refractive index (%) | Decrease of $F_{CP}$ | S-shaped curling |
|---|---|---|---|---|---|---|---|---|---|---|---|---|
| Example 19 | MXD6 | Amorphous Ny/MXD6 = 7/3 | Ny6 | 4.5/0.5/5.0/0.5/4.5 | 15 | 190 | 0 | 2.2 | 1.497 | 0.04 | Not found | E |
| Example 20 | MXD6 | Amorphous Ny/MXD6 = 7/3 | Ny6 | 4.5/0.5/5.0/0.5/4.5 | 15 | 190 | 2 | 3.4 | 1.500 | 0.26 | Not found | G |
| Example 21 | MXD6 | Amorphous Ny/MXD6 = 7/3 | Ny6 | 4.5/0.5/5.0/0.5/4.5 | 15 | 190 | 1 | 3.1 | 1.498 | 0.22 | Not found | E |
| Example 22 | MXD6 | Amorphous Ny/MXD6 = 7/3 | Ny6 | 4.5/0.5/5.0/0.5/4.5 | 15 | 190 | 0 | 2.4 | 1.496 | 0.11 | Not found | E |
| Example 23 | MXD6 | Amorphous Ny/MXD6 = 7/3 | Ny6 | 8.0/0.5/8.0 0.5/8.0 | 25 | 190 | 0 | 2.4 | 1.499 | 0.33 | Not found | G |
| Example 24 | MXD6/ ethylene-butene copolymer | None | Ny6 | 5.0/0/5.0/0/5.0 | 15 | 180 | 0 | 2.1 | 1.496 | 0.07 | Not found | E |
| Example 25 | EVOH | None | Ny6 | 5.0/0/5.0/0/5.0 | 15 | 170 | 0 | 2.5 | 1.495 | 0.23 | Not found | E |
| Comparative Example 8 | MXD6 | Amorphous Ny/MXD6 = 7/3 | Ny6 | 4.5/0.5/5.0/0.5/4.5 | 15 | 190 | 5 | 9.5 | 1.501 | 1.3 | Found | A |
| Comparative Example 9 | MXD6 | Amorphous Ny/MXD6 = 7/3 | Ny6 | 8.0/0.5/8.0 0.5/8.0 | 25 | 190 | 5 | 9.7 | 1.498 | 1.5 | Found | P |
| Comparative Example 10 | EVOH | None | NY6 | 5.0/0/5.0/0/5.0 | 15 | 170 | 5 | 11.1 | 1.499 | 3.2 | Found | P |

Example 20

As compared to Example 19, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 2%. Otherwise in the same manner as in Example 19, a product roll of a simultaneously biaxially stretched laminated polyamide resin film was obtained.

The measurement results of the individual properties of the obtained film are shown in Table 3. As can be seen from Table 3, the thickness unevenness augmentation factor in the widthwise direction was found to be 3.4 (the coefficient of variation of the thickness of the unstretched film was 1.0%, whereas the coefficient of variation of the thickness of the stretched film was 3.4%), to indicate that the thickness unevenness was increased as compared to Example 19. The average of the refractive index in the thickness direction was 1.500, and the variation rate of the refractive index in the thickness direction was found to be 0.26% to indicate that the film was stretched uniformly. The $F_{CP}$ shown in FIG. 4 was temporarily in an equilibrium condition but underwent no decrease. In other words, a film stretched almost uniformly and free from any practical problems was obtained. Consequently, the film was able to be adopted as a film product.

Example 21

As compared to Example 19, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 1%. Otherwise in the same manner as in Example 19, a product roll of a simultaneously biaxially stretched polyamide film was obtained.

The measurement results of the individual properties of the obtained film are shown in Table 3. As can be seen from Table 3, the thickness unevenness augmentation factor in the widthwise direction was found to be 3.1 (the coefficient of variation of the thickness of the unstretched film was 1.0%, whereas the coefficient of variation of the thickness of the stretched film was 3.1%), to indicate that the thickness unevenness was somewhat increased as compared to Example 19. The average of the refractive index in the thickness direction was 1.498, and the variation rate of the refractive index in the thickness direction was found to be 0.22%. No decrease of $F_{CP}$ was found. In other words, a film stretched almost uniformly and free from any practical problems was obtained. Consequently, the film was able to be adopted as a film product.

Example 22

An unstretched polyamide film prepared under the same conditions as in Example 19 was fed to a pantograph-type simultaneous biaxial stretching machine, the both widthwise edges of the film were gripped with clips, and the film was subjected to a simultaneous biaxial stretching with a longitudinal stretching magnification factor of 3.0 and a transverse stretching magnification factor of 3.3. In this case, by regulating the separation between the guide rails, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1. Otherwise in the same manner as in Example 19, a product roll of a simultaneously biaxially stretched polyamide film was obtained.

The measurement results of the individual properties of the obtained film are shown in Table 3. As can be seen from Table 3, the thickness unevenness augmentation factor in the widthwise direction was found to be 2.4 (the coefficient of variation of the thickness of the unstretched film was 1.0%, whereas the coefficient of variation of the thickness of the stretched film was 2.4%). The average of the refractive index in the thickness direction was 1.496, and the variation rate of the refractive index in the thickness direction was found to be 0.11% to indicate that the film was stretched uniformly. Absolutely no decrease of $F_{CP}$ was found. In other words, a film stretched uniformly both in the widthwise direction and in the lengthwise direction was obtained, and accordingly the film was practically usable as a product almost over the whole width thereof.

Example 23

By using a five-layer coextrusion T-die, MXD6 constituting the resin layer (X) was melt-extruded at 280°C from a first extruder, a mixture prepared by blending nylon 6 resin (A1030-BRF, manufactured by Unitika Ltd.) and the above-described master chip in such a way that the mixing proportion of silica was 0.05% by mass, constituting the resin layer (Z) was melt-extruded at 270°C from a second extruder, and a resin prepared by mixing 30 parts by mass of MXD6 and 70 parts by mass of XE3038, constituting the resin layer (Y) was melt-extruded at 280°C from a third extruder. Thus, a laminated unstretched sheet that was laminated in the order of Z/Y/X/Y/Z was extruded from the die, and brought into close contact on a cooling drum regulated at a surface temperature of 18°C to be rapidly cooled, to prepare a 250-μm thick unstretched laminated sheet. Successively, the prepared sheet was subjected to a water absorption treatment by passing the sheet through a heated water tank regulated in temperature at 50°C. Next, this film was fed to a simultaneous biaxial stretching tenter driven by linear motors, the both widthwise edges of the film were gripped with clips, and the film was subjected to a simultaneous biaxial stretching under the condition of 190°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1.

The film was further heat treated at 210°C for 4 seconds with a relaxation rate of 5% in the transverse direction, and slowly cooled down to room temperature, to prepare a product roll of a laminated stretched film having thickness values of Z/Y/X/Y/Z = 8.0/0.5/8.0/0.5/8.0 μm. The winding-up speed was set at 120 m/min.

The measurement results of the individual properties of the obtained film are shown in Table 3. As can be seen from Table 3, the thickness unevenness augmentation factor in the widthwise direction was found to be 2.4. Specifically, the coefficient of variation of the thickness of the unstretched film was 1.0%, whereas the coefficient of variation of the thickness of the stretched film was 2.4%. The average of the refractive index in the thickness direction was 1.499, and the variation rate of the refractive index in the thickness direction was found to be 0.33% to indicate that the film was stretched uniformly. During stretching, absolutely no decrease of the $F_{CP}$ shown in FIG. 4 was found. In other words, a film stretched uniformly both in the widthwise direction and in the lengthwise direction was obtained. Consequently, the film was practically usable as a product almost over the whole width thereof.

Example 24

By using a three-layer coextrusion T-die, MXD6 and ethylene-butene copolymer as an impact resistance-improving resin both constituting the resin layer (X) was melt-extruded at 280°C from a first extruder in MXD6/ethylene-butene copolymer = 97/3 (mass ratio), and additionally, a mixture prepared by blending nylon 6 resin (A1030-BRF, manufactured by Unitika Ltd.) and the above-described master chip in such a way that the mixing proportion of silica was 0.05% by mass, constituting the resin layer (Z) was melt-extruded at 270°C from a second extruder. Thus, a laminated unstretched sheet that was laminated in the order of Z/X/Z was extruded from the die, and brought into close contact on a cooling drum regulated at a surface temperature of 19°C to be rapidly cooled, to prepare a 150-μm thick unstretched laminated sheet. Successively, the prepared sheet was subjected to a water absorption treatment by passing the sheet through a heated water tank regulated in temperature at 50°C. Next, this film was fed to a simultaneous biaxial stretching tenter driven by linear motors, the both widthwise edges of the film were gripped with clips, and the film was subjected to a simultaneous biaxial stretching under the condition of 180°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1.

The film was further heat treated at 210°C for 4 seconds with a relaxation rate of 5% in the transverse direction, and slowly cooled down to room temperature, to prepare a product roll of a laminated stretched film having thickness values of Z/X/Z = 5.0/5.0/5.0 μm. The winding-up speed was set at 120 m/min.

The measurement results of the individual properties of the obtained film are shown in Table 3. As can be seen from Table 3, the thickness unevenness augmentation factor in the widthwise direction was found to be 2.1. Specifically, the coefficient of variation of the thickness of the unstretched film was 1.0%, whereas the coefficient of variation of the thickness of the stretched film was 2.1%. The average of the refractive index in the thickness direction was 1.496, and the variation rate of the refractive index in the thickness direction was found to be 0.07% to indicate that the film was stretched uniformly. During stretching, absolutely no decrease of the $F_{CP}$ shown in FIG. 4 was found. In other words, a film stretched uniformly both in the widthwise direction and in the lengthwise direction was obtained. Consequently, the film was practically usable as a product almost over the whole width thereof.

Example 25

By using a three-layer coextrusion T-die, EVOH (F101B, manufactured by Kuraray Co., Ltd.) constituting the resin layer (X) was melt-extruded at 270°C from a first extruder, and a mixture prepared by blending nylon 6 resin (A1030-BRF, manufactured by Unitika Ltd.) and the above-described master chip in such a way that the mixing proportion of silica was 0.05% by mass, constituting the resin layer (Z) was melt-extruded at 270°C from a second extruder; and a laminated unstretched sheet having a configuration of nylon 6/EVOH/nylon 6 was melt-extruded from a T-die of 600 mm in width, and brought into close contact on a cooling drum regulated at a surface temperature of 18°C to be rapidly cooled, to form a 150-$\mu$m thick unstretched polyamide film. Successively, the film was subjected to a water absorption treatment by passing the sheet through a heated water tank regulated in temperature at 50°C. Next, this film was fed to a simultaneous biaxial stretching tenter driven by linear motors, the both widthwise edges of the film were gripped with clips, and the film was subjected to a simultaneous biaxial stretching under the condition of 170°C with a longitudinal stretching magnification factor of 3.0 and a transverse stretching magnification factor of 3.3. In this case, by regulating the frequency of each of the linear motor drivers, the distortions of the longitudinal stretching magnification factor trace were corrected, and thus adopted was the longitudinal stretching magnification factor trace free from the decrease of the longitudinal stretching magnification factor represented by the inter-clip distance, as shown by A in FIG. 1.

The film was further heat treated at 210°C for 4.0 seconds, and then immediately heat treated in an atmosphere of 170°C for 10 seconds, then cooled at 90°C for 2.0 seconds. Then, the both widthwise edges of the film were trimmed, and then the film was wound up with a winder. In this way, a product roll of a simultaneously biaxially stretched laminated polyamide film of nylon 6/EVOH/nylon 6 = 5.0/5.0/5.0 $\mu$m was obtained. The winding-up speed was set at 120 m/min.

The measurement results of the individual properties of the obtained film are shown in Table 3. As can be seen from Table 3, the thickness unevenness augmentation factor in the widthwise direction was found to be 2.5. Specifically, the coefficient of variation of the thickness of the unstretched film was 1.0%, whereas the coefficient of variation of the thickness of the stretched film was 2.5%. The average of the refractive index in the thickness direction was 1.495, and the variation rate of the refractive index in the thickness direction was found to be 0.23% to indicate that the film was stretched uniformly. During stretching, absolutely no decrease of the $F_{CP}$ shown in FIG. 4 was found. In other words, a film stretched uniformly both in the widthwise direction and in the lengthwise direction was obtained. Consequently, the film was practically usable as a product almost over the whole width thereof.

Comparative Example 8

As compared to Example 19, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 5%. Otherwise in the same manner as in Example 19, a product roll of a simultaneously biaxially stretched polyamide film was obtained.

The measurement results of the individual properties of the obtained film are shown in Table 3. As can be seen from Table 3, the thickness unevenness augmentation factor in the widthwise direction was found to be 9.5 (the coefficient of variation of the thickness of the unstretched film was 1.0%, whereas the coefficient of variation of the thickness of the stretched film was 9.5%). The average of the refractive index in the thickness direction was 1.501, and the variation rate of the refractive index in the thickness direction was found to be 1.3%, and remarkable stretching unevenness was observed. The $F_{CP}$ shown in FIG. 4 was temporarily decreased by 30%. As can be seen from Table 3, the prepared film was not able to be adopted as a film product.

Comparative Example 9

As compared to Example 23, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 5%. Otherwise in the same manner as in Example 23, a product roll of a simultaneously biaxially stretched polyamide film was obtained.

The measurement results of the individual properties of the obtained film are shown in Table 3. As can be seen from Table 3, the thickness unevenness augmentation factor in the widthwise direction was found to be 9.7 (the coefficient of variation of the thickness of the unstretched film was 1.0%, whereas the coefficient of variation of the thickness of the stretched film was 9.7%). The average of the refractive index in the thickness direction was 1.498, and the variation rate of the refractive index in the thickness direction was found to be 1.5%, and remarkable stretching unevenness was observed. $F_{CP}$ was temporarily decreased by 30%. As can be seen from Table 3, the prepared film was not able to be adopted as a film product.

Comparative Example 10

As compared to Example 25, adopted was the longitudinal stretching magnification factor trace in which the longitudinal stretching magnification factor represented by the inter-clip distance was decreased, as shown by B in FIG. 1. Additionally, the decrease rate of the longitudinal stretching magnification factor was set at 5%. Otherwise in the same manner as in Example 25, a product roll of a simultaneously biaxially stretched polyamide film was obtained.

The measurement results of the individual properties of the obtained film are shown in Table 3. As can be seen from Table 3, the thickness unevenness augmentation factor in the widthwise direction was found to be 11.1 (the coefficient of variation of the thickness of the unstretched film was 1.0%, whereas the coefficient of variation of the thickness of the stretched film was 11.1%). The average of the refractive index in the thickness direction was 1.499, and the variation rate of the refractive index in the thickness direction was found to be 3.2%, and remarkable stretching unevenness was observed. $F_{CP}$ was temporarily decreased by 30%. As can be seen from Table 3, the prepared film was not able to be adopted as a film product.

## Claims

1. A process for producing a polyamide resin film,
wherein an unstretched film is simultaneously biaxially, longitudinally and transversely stretched by a simultaneous biaxial tenter stretching method, in which the widthwise edges of the unstretched film is gripped at the positions away from the guide rails (21) with clips (23) attached to travelling supports (22) guided by the guide rails, wherein the supports (22) travel along a curved portions which contains a curved orbit in the early stretching stage (13) and a reversely curved orbit in the final stretching stage (14),
the inter-clip distance (D) varies in the curved orbit of the early stretching stage (13) so as to expand once in the first place and to then get back as before,
the inter-clip distance (D) varies in the reversely curved orbit of the final stretching stage (14) so as to shrink once in the first place and to then get back as before, and **characterized in that** from a start of a transverse stretching (11) until a maximum stretching magnification factor of the transverse stretching is reached (12), a longitudinal stretching magnification factor represented by a linear distance between adjacent clips is prevented from being decreased by 5% or more of a maximum stretching magnification factor of a longitudinal stretching.

2. The process for producing a polyamide resin film according to claim 1,
wherein from the start of the transverse stretching (11) until the maximum stretching magnification factor of the transverse stretching is reached (12), the longitudinal stretching magnification factor represented by the linear distance between the adjacent clips is prevented from being decreased by more than 3% of the maximum stretching magnification factor of the longitudinal stretching.

3. The process for producing a polyamide resin film according to claim 1,
wherein at any given point in time during stretching, the magnification factor of the longitudinal stretching at the given point in time relative to the maximum stretching magnification factor of the longitudinal stretching is made higher than the magnification factor of the transverse stretching at the given point in time relative to the maximum stretching magnification factor of the transverse stretching.

4. The process for producing a polyamide resin film according claim 1,
wherein the longitudinal stretching magnification factor of the simultaneous biaxial stretching is 2.5 or more and 4.5 or less and a ratio between the longitudinal stretching magnification factor and the transverse stretching magnification factor is 1:0.5 to 1.5.

5. The process for producing a polyamide resin film according claim 1,
wherein a simultaneous biaxial tenter stretching machine is driven by a linear motor system.

6. The process for producing a polyamide resin film according claim 1,
wherein a laminated portion is formed by a coating method on at least one side of an unstretched film obtained by pressing against a cast roll a polyamide resin sheet melt-extruded from a die, and a laminate thus obtained is stretched simultaneously biaxially, longitudinally and transversely, by gripping with the clips the both widthwise edges of the laminate thus obtained.

## Patentansprüche

1. Verfahren zur Herstellung einer Polyamidharzfolie, wobei
eine ungereckte Folie gleichzeitig biaxial, längs und quer durch ein gleichzeitiges biaxiales Spannrahmen-Reckverfahren, bei dem die breitseitigen Kanten der ungereckten Folie an den von den Führungsschienen (21) entfernten Positionen mit an beweglichen, von den Führungsschienen geführten Stützen (22) Klammern (23) umgriffen ist, gereckt wird, wobei
sich die Stützen (22) entlang einem gekrümmten Abschnitt bewegen, der eine gekrümmte Kreisbahn in der frühen Reckstufe (13) und eine umgekehrt gekrümmte Kreisbahn in der abschließenden Reckstufe (14) aufweist,

der Klammer-zu-Klammer-Abstand (D) in der gekrümmten Kreisbahn der frühen Reckstufe (13) variiert, um sich einmal in der ersten Stelle auszudehnen und dann wie vorher zurückzukehren,

der Klammer-zu-Klammer-Abstand (D) in der umgekehrt gekrümmten Kreisbahn der abschließenden Reckstufe (14) variiert, um einmal an der ersten Stelle zu schrumpfen und dann wie vorher zurückzukehren, und

**dadurch gekennzeichnet, dass**

ab einem Beginn eines Querreckens (11) bis zum Erreichen eines maximalen Reckvergrößerungsfaktors des Querreckens (12) bei einem Längsreckvergrößerungsfaktor, der dargestellt ist durch einen linearen Abstand zwischen benachbarten Klammern, eine Verringerung um 5 % oder mehr eines maximalen Reckvergrößerungsfaktors eines Längsreckens verhindert wird.

2. Verfahren nach Anspruch 1 zur Herstellung einer Polyamidharzfolie, wobei

ab einem Beginn des Querreckens (11) bis zum Erreichen eines maximalen Reckvergrößerungsfaktors des Querreckens (12) bei einem Längsreckvergrößerungsfaktor, der dargestellt ist durch den linearen Abstand zwischen den benachbarten Klammern, eine Verringerung um mehr als 3 % eines maximalen Reckvergrößerungsfaktors eines Längsreckens verhindert wird.

3. Verfahren nach Anspruch 1 zur Herstellung einer Polyamidharzfolie, wobei

zu jedem vorgegebenen Zeitpunkt während des Reckens der Vergrößerungsfaktor des Längsreckens zum vorgegebenen Zeitpunkt im Verhältnis zum maximalen Reckvergrößerungsfaktor des Längsreckens größer als der Vergrößerungsfaktor des Querreckens zum vorgegebenen Zeitpunkt im Verhältnis zum maximalen Reckvergrößerungsfaktor des Längsreckens gemacht wird.

4. Verfahren nach Anspruch 1 zur Herstellung einer Polyamidharzfolie, wobei

der Längsreckvergrößerungsfaktor des gleichzeitigen biaxialen Reckens 2,5 oder mehr und 4,5 oder weniger und ein Verhältnis des Längsreckvergrößerungsfaktors zum Querreckvergrößerungsfaktor 1:0,5 bis 1,5 beträgt.

5. Verfahren nach Anspruch 1 zur Herstellung einer Polyamidharzfolie, wobei

eine Biaxial-Spannrahmen-Reckmaschine durch ein Linearmotorsystem angetrieben ist.

6. Verfahren nach Anspruch 1 zur Herstellung einer Polyamidharzfolie, wobei

ein laminierter Abschnitt durch ein Beschichtungsverfahren auf wenigstens einer Seite einer ungereckten Folie durch Andrücken eines schmelzextrudierten Polyamidharzbogens von einem Formwerkzeug gegen eine Gießwalze gebildet wird, und ein so erhaltenes Laminat gleichzeitig biaxial, längs und quer durch Umgreifen der breitseitigen Kanten mit den Klammern des so erhaltenen Laminats gereckt ist.

## Revendications

1. Procédé pour produire un film de résine de polyamide, dans lequel un film non étiré est étiré simultanément de manière biaxiale, longitudinale et transversale par un procédé d'étirement biaxial simultané par rame, dans lequel les bords dans le sens de la largeur du film non étiré sont saisis dans les positions à distance des rails de guidage (21) avec des pinces (23) fixées aux supports mobiles (22) guidés par les rails de guidage,

dans lequel :

les supports (22) se déplacent le long d'une partie incurvée qui contient une orbite incurvée au stade d'étirement précoce (13) et une orbite incurvée de manière inverse au stade d'étirement final (14),

la distance entre les pinces (D) varie dans l'orbite incurvée du stade d'étirement précoce (13) afin de subir une expansion une fois dans un premier temps et pour revenir ensuite comme auparavant,

la distance entre les pinces (D) varie dans l'orbite incurvée de manière inverse du stade d'étirement final (14) afin de se rétrécir une fois dans un premier temps et ensuite de revenir comme auparavant, et

**caractérisé en ce que** :

à partir du début d'un étirement transversal (11) jusqu'à ce qu'un facteur d'amplification d'étirement maximum de l'étirement transversal soit atteint (12), un facteur d'amplification d'étirement longitudinal représenté par une distance linéaire entre les pinces adjacentes ne peut pas être réduit de 5 % ou plus d'un facteur d'amplification d'étirement maximum d'un étirement longitudinal.

2. Procédé pour produire un film de résine de polyamide selon la revendication 1, dans lequel à partir du début de l'étirement transversal (11) jusqu'à ce que le facteur d'amplification d'étirement maximum de l'étirement transversal soit atteint (12), le facteur d'amplification d'étirement longitudinal représenté par la distance linéaire entre les pinces adjacentes ne peut pas être réduit par plus de 3 % du facteur d'amplification d'étirement maximum de l'étirement longitudinal.

3. Procédé pour produire un film de résine de polyamide selon la revendication 1, dans lequel à n'importe quel moment donné pendant l'étirement, le facteur d'amplification de l'étirement longitudinal au moment donné par rapport au facteur d'amplification d'étirement maximum de l'étirement longitudinal est supérieur au facteur d'amplification de l'étirement transversal au moment donné par rapport au facteur d'amplification d'étirement maximum de l'étirement transversal.

4. Procédé pour produire un film de résine de polyamide selon la revendication 1, dans lequel le facteur d'amplification d'étirement longitudinal de l'étirement biaxial simultané est de 2,5 ou supérieur et de 4,5 ou inférieur et un rapport entre le facteur d'amplification d'étirement longitudinal et le facteur d'amplification d'étirement transversal est de 1 : 0,5 à 1,5.

5. Procédé pour produire un film de résine de polyamide selon la revendication 1, dans lequel une machine d'étirement biaxial simultané à rame est entraînée par un système de moteur linéaire.

6. Procédé pour produire un film de résine de polyamide selon la revendication 1, dans lequel une partie stratifiée est formée par un procédé de revêtement sur au moins un côté d'un film non étiré obtenu en appuyant, contre un cylindre de coulée, une feuille de résine de polyamide extrudée à chaud d'une matrice, et un stratifié ainsi obtenu est étiré simultanément de manière biaxiale, longitudinale et transversale, en saisissant avec les pinces, les deux bords dans le sens de la largeur du stratifié ainsi obtenu.

# FIG. 1

## FIG. 2

## FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3671978 B
- WO 2005118262 A1
- WO 2006112090 A1
- JP 2000309051 A
- JP 2002370278 A
- JP 2131920 A
- JP 51033590 B
- JP 456785 B